(19) Europäisches Patentamt
European Patent Office
Office européen des brevets

(11) **EP 4 734 525 A1**

(12) **EUROPEAN PATENT APPLICATION**
published in accordance with Art. 153(4) EPC

(43) Date of publication:
**29.04.2026 Bulletin 2026/18**

(21) Application number: **24881666.2**

(22) Date of filing: **23.10.2024**

(51) International Patent Classification (IPC):
*H04N 19/91* (2014.01)  *G06N 3/082* (2023.01)

(52) Cooperative Patent Classification (CPC):
**G06N 3/082; G06T 9/00; H04N 19/186;
H04N 19/42; H04N 19/70; H04N 19/91**

(86) International application number:
**PCT/CN2024/126865**

(87) International publication number:
**WO 2025/087302 (01.05.2025 Gazette 2025/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.10.2023 CN 202311387237**

(71) Applicant: **Huawei Technologies Co., Ltd.
Shenzhen, Guangdong 518129 (CN)**

(72) Inventors:
• **ZHANG, Shifeng
Shenzhen, Guangdong 518129 (CN)**
• **YU, Dequan
Shenzhen, Guangdong 518129 (CN)**
• **KANG, Ning
Shenzhen, Guangdong 518129 (CN)**

(74) Representative: **Grünecker Patent- und
Rechtsanwälte
PartG mbB
Leopoldstraße 4
80802 München (DE)**

(54) **CODING METHOD AND APPARATUS, AND DECODING METHOD AND APPARATUS**

(57) This application relates to the field of picture encoding and decoding, and discloses a picture encoding or decoding method, which may be applied to a next-generation picture or video encoding and decoding standard such as JPEG-AI, and include: obtaining a first feature of a picture, where a shape of the first feature is [C, h, w]; shuffling the first feature to obtain a second feature, where a shape of the second feature is [4C, h/2, w/2], the second feature includes C sub-features, and a shape of each sub-feature is [4, h/2, w/2]; concatenating the second feature to obtain K third features, where a shape of a $k^{th}$ third feature is [C, h/2, w/2], the $k^{th}$ third feature includes one channel of each sub-feature of the second feature, and K is a positive integer greater than 2; and encoding or decoding the picture based on the K third features. In this application, same-channel adjacent pixel information of a latent variable and pixel information at a same location in a surrounding channel can be fully used, so that a latent variable predicted by a context model is more accurate, thereby reducing a quantity of bits required for encoding the latent variable, and reducing a bit rate.

[FIG. 3]

```
                                    1000

1001: Obtain a first feature of a picture, where a shape of the first feature is [C, h, w]

                                      ↓

1003: Shuffle the first feature to obtain a second feature, where a shape of the second
feature is [4C, h/2, w/2], the second feature includes C sub-features, and a shape of each
sub-feature is [4, h/2, w/2]

                                      ↓

1005: Concatenate the second feature to obtain K third features, where a shape of a k^th
third feature is [C, h/2, w/2]

                                      ↓

1007: Encode or decode the picture based on the K third features
```

**Description**

TECHNICAL FIELD

Embodiments of this application relate to the field of picture or video encoding and decoding, and in particular, to an encoding method and apparatus, and a decoding method and apparatus.

BACKGROUND

An AI (Artificial Intelligence, artificial intelligence) picture compression algorithm is implemented based on deep learning, and has better compression effect than conventional picture compression technologies (for example, JPEG (Joint Photographic Experts Group, joint photographic experts group) and BPG (Better Portable Graphics, better portable graphics)).

When AI compression (also referred to as encoding) and decompression (also referred to as decoding) are used, input data is complex data such as a picture or a video. An encoder and a hyper encoder output a latent variable and a hyper latent variable, and perform entropy encoding on the latent variable and the hyper latent variable. In a decoding process, the hyper latent variable is first decoded, then the latent variable is predicted by using a hyper decoder and restored based on an entropy decoding result and a context model, and finally the original data is restored by using a decoder.

During AI encoding and decoding, the context model needs to be used to predict the latent variable. Prediction accuracy of the context model directly affects overall effect of encoding and decoding.

SUMMARY

This application provides an encoding method and apparatus, and a decoding method and apparatus. In the method, same-channel adjacent pixel information of a latent variable and pixel information at a same location in a surrounding channel can be fully used, so that prediction performed by a context model is more accurate, thereby reducing a quantity of bits required for entropy-encoding the latent variable, and achieving better encoding performance.

According to a first aspect, an embodiment of this application provides an encoding or decoding method. The method includes: obtaining a first feature of a picture (in an entire encoding and decoding process of the picture, the first feature may be referred to as a prior feature), where a shape of the first feature is [C, h, w], C represents a quantity of channels of the first feature, h represents a length of the first feature, w represents a width of the first feature, C, h, and w are all positive integer multiples of 2, each channel of the first feature includes $(h/2) \times (w/2)$ $2 \times 2$ pixel blocks, and each pixel block includes four pixels: an upper left pixel, a lower right pixel, an upper right pixel, and a lower left pixel; shuffling the first feature to obtain a second feature, where a shape of the second feature is [4C, h/2, w/2], the second feature includes C sub-features, a shape of each sub-feature is [4, h/2, w/2], a $c^{th}$ sub-feature of the second feature corresponds to a $c^{th}$ channel of the first feature, c is a positive integer, $1 \leq c \leq C$, and four channels of the $c^{th}$ sub-feature respectively include upper left pixels, lower right pixels, upper right pixels, and lower left pixels in all pixel blocks of the $c^{th}$ channel of the first feature; concatenating the second feature to obtain K third features, where a shape of a $k^{th}$ third feature is [C, h/2, w/2], the $k^{th}$ third feature includes one channel of each sub-feature of the second feature, K is a positive integer greater than 2, k is a positive integer, and $1 \leq k \leq K$; and encoding or decoding the picture based on the K third features.

In this application, a prior feature (that is, the first feature) is shuffled and concatenated to obtain a prior feature with more appropriate segments, and then the prior feature is input into a context model to predict a latent variable by segment, so that same-channel adjacent pixel information in a previously predicted segment of the latent variable and pixel information at a same location in a surrounding channel can be fully used when a subsequent segment of the latent variable is predicted, thereby improving accuracy of predicting the latent variable, reducing a quantity of bits required for encoding the latent variable, and improving encoding efficiency. After bits required in a bitstream are reduced, a communication bandwidth required for transmitting the bitstream and storage resources required for storing the bitstream can be further saved, and corresponding technical effects can be reflected in all of an encoding process, a transmission process, and a decoding process. The prior feature is processed on a decoder side in a same manner as that on an encoder side, so that correct decoding can be ensured.

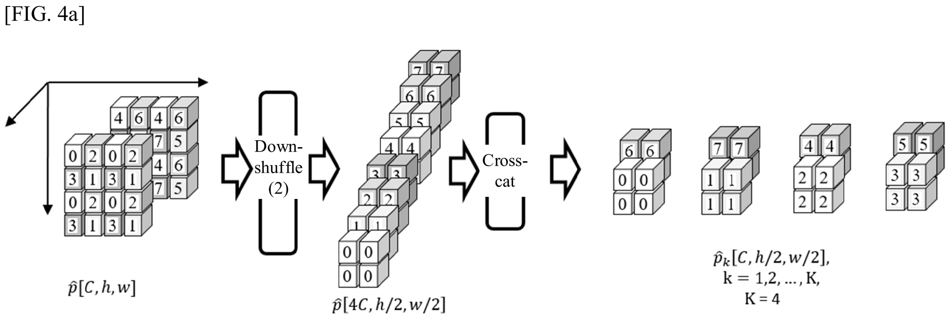

In a possible implementation of the first aspect, as shown in FIG. 4a to FIG. 4d, an upper left pixel, a lower right pixel, an upper right pixel, and a lower left pixel of each $2 \times 2$ pixel block in the $c^{th}$ channel of the first feature are respectively represented by 0, 1, 2, and 3, or 4, 5, 6, and 7, where c is a positive integer and $1 \leq c \leq C$. In other words, an upper left pixel of each pixel block in the same channel is represented by 0 or 4, a lower right pixel of each pixel block in the same channel is represented by 1 or 5, an upper right pixel of each pixel block in the same channel is represented by 2 or 5, and a lower left pixel of each pixel block in the same channel is represented by 4 or 7.

It should be noted that FIG. 4a to FIG. 4d provide only several specific examples of the solution provided in this application. In this application, a value of C is not limited to 2 or 4, and values of h and w are not limited to 4, provided that C, h, and w are all positive integers and are integer multiples of 2. A channel arrangement of each of the K third features is not limited in this application, provided that N pixels at a same location in N channels of the $k^{th}$ third feature have different locations in N channels of the first feature, where N is a positive integer and $2 \leq N \leq C$. A value of K is not limited to 3 or 4 in this application, provided that K is a positive integer greater than 2.

In the method provided in this application, quantities of channels of all of the K third features may be the same or may be different, but a sum of the quantities of channels of all of the K third features is required to be four times C.

In a possible implementation of the first aspect, the third feature obtained through concatenation meets the following condition: N pixels at a same location in N channels of the $k^{th}$ third feature have different locations in N channels of the first feature, where N is a positive integer and $2 \leq N \leq C$. A location of a pixel may be represented by using spatial coordinates [x, y], x represents a horizontal coordinate offset of the pixel relative to an upper left corner of the picture, and y represents a vertical coordinate offset of the pixel relative to the upper left corner of the picture. Alternatively, a location of a pixel may be indicated by using a representation symbol of the pixel. The N pixels at the same location in the N channels of the $k^{th}$ third feature having different locations in the N channels of the first feature means that the following cases are excluded for pixels included in the N channels: (1) all the pixels are upper left pixels of $2 \times 2$ pixel blocks in the first feature; (2) all the pixels are lower right pixels of $2 \times 2$ pixel blocks in the first feature; (3) all the pixels are upper right pixels of $2 \times 2$ pixel blocks in the first feature; and (4) all the pixels are lower left pixels of $2 \times 2$ pixel blocks in the first feature. The N pixels at the same location in the N channels of the $k^{th}$ third feature obtained through concatenation are limited to having different locations in the N channels of the first feature. This can ensure that when the third feature is used to predict a latent variable, pixel information at a same location in a surrounding channel can be fully used (because a pixel at the same location in the surrounding channel has been obtained in previous segment prediction), so that accuracy of predicting the latent variable can be improved, a quantity of bits required for encoding the latent variable can be reduced, and a bit rate can be reduced. It should be noted that, in this application, it only needs to set a limitation that at least one of all the K third features meets the foregoing condition, and it is not required that all the third features meet the foregoing condition.

In a possible implementation of the first aspect, C/2 channels of the $k^{th}$ third feature include an $i^{th}$ channel of each sub-feature in a first portion of sub-features of the second feature, remaining C/2 channels of the $k^{th}$ third feature include a $j^{th}$ channel of each sub-feature in a second portion of sub-features of the second feature, i and j are positive integers, $1 \leq i \leq 4$, $1 \leq j \leq 4$, $i \neq j$, the first portion of sub-features and the second portion of sub-features each include C/2 sub-features of the second feature, and the first portion of sub-features and the second portion of sub-features jointly form the second feature. When K=4 and C=2, possible concatenations in this implementation are listed in Table 1. A $1^{st}$ channel, a $2^{nd}$ channel, a $3^{rd}$ channel, and a $4^{th}$ channel of any sub-feature of the second feature sequentially include upper left pixels, lower right pixels, upper right pixels, and lower left pixels of all $2 \times 2$ pixel blocks in a same channel of the first feature. Therefore, through a limitation of $i \neq j$, it can be ensured that the C/2 channels and the remaining C/2 channels of the $k^{th}$ third feature include pixels at different locations in pixel blocks in the first feature, so as to ensure that in a division manner, same-channel adjacent pixel information and pixel information at a same location in a surrounding channel can be fully used when a context model predicts a latent variable, so that the latent variable predicted by the context model is more accurate, a quantity of bits required for transmitting a residual of the latent variable is reduced, and encoding efficiency is improved. It should be noted that, in this application, it only needs to set a limitation that at least one of all the K third features meets the foregoing condition, and it is not required that all the K third features meet the foregoing condition.

In a possible embodiment of the foregoing implementation, when K=4, C/2 channels of a $1^{st}$ third feature include a $1^{st}$ channel of each sub-feature in the first portion of sub-features, and remaining C/2 channels of the $1^{st}$ third feature include a $3^{rd}$ channel of each sub-feature in the second portion of sub-features; C/2 channels of a $2^{nd}$ third feature include a $2^{nd}$ channel of each sub-feature in the first portion of sub-features, and remaining C/2 channels of the $2^{nd}$ third feature include a $4^{th}$ channel of each sub-feature in the second portion of sub-features; C/2 channels of a $3^{rd}$ third feature include a $3^{rd}$ channel of each sub-feature in the first portion of sub-features, and remaining C/2 channels of the $3^{rd}$ third feature include a $1^{st}$ channel of each sub-feature in the second portion of sub-features; and C/2 channels of a $4^{th}$ third feature include a $4^{th}$ channel of each sub-feature in the first portion of sub-features, and remaining C/2 channels of the $4^{th}$ third feature include a $2^{nd}$ channel of each sub-feature in the second portion of sub-features. If C=2, it indicates the example shown in FIG. 4a. To be specific, the $1^{st}$ third feature includes a $1^{st}$ channel of a $1^{st}$ sub-feature of the second feature and a $3^{rd}$ channel of a $2^{nd}$ sub-feature of the second feature; the $2^{nd}$ third feature includes a $2^{nd}$ channel of the $1^{st}$ sub-feature of the second feature and a $4^{th}$ channel of the $2^{nd}$ sub-feature of the second feature; the $3^{rd}$ third feature includes a $3^{rd}$ channel of the $1^{st}$ sub-feature of the second feature and a $1^{st}$ channel of the $2^{nd}$ sub-feature of the second feature; and the $4^{th}$ third feature includes a $4^{th}$ channel of the $1^{st}$ sub-feature of the second feature and a $2^{nd}$ channel of the $2^{nd}$ sub-feature of the second feature.

In a possible embodiment of the foregoing implementation, when K=4, C/2 channels of a $1^{st}$ third feature include a $1^{st}$ channel of each sub-feature in the first portion of sub-features, and remaining C/2 channels of the $1^{st}$ third feature include a $4^{th}$ channel of each sub-feature in the second portion of sub-features; C/2 channels of a $2^{nd}$ third feature include a $2^{nd}$ channel of each sub-feature in the first portion of sub-features, and remaining C/2 channels of the $2^{nd}$ third feature include a $3^{rd}$ channel of each sub-feature in the second portion of sub-features; C/2 channels of a $3^{rd}$ third feature include a

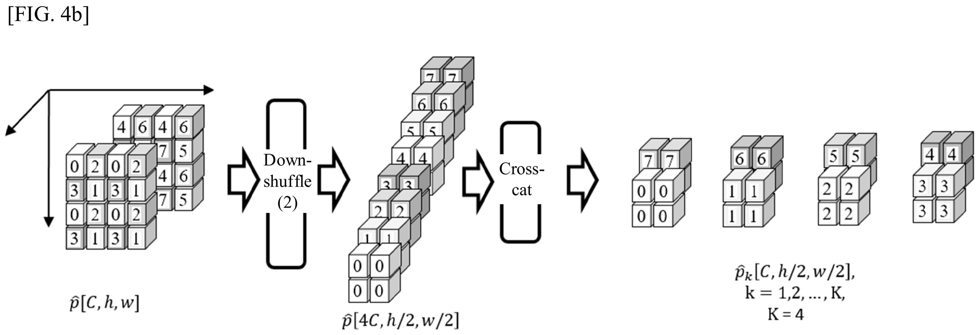

3rd channel of each sub-feature in the first portion of sub-features, and remaining C/2 channels of the 3rd third feature include a 2nd channel of each sub-feature in the second portion of sub-features; and C/2 channels of a 4th third feature include a 4th channel of each sub-feature in the first portion of sub-features, and remaining C/2 channels of the 4th third feature include a 1st channel of each sub-feature in the second portion of sub-features. If C=2, it indicates the example shown in FIG. 4b. To be specific, the 1st third feature includes a 1st channel of a 1st sub-feature of the second feature and a 4th channel of a 2nd sub-feature of the second feature; the 2nd third feature includes a 2nd channel of the 1st sub-feature of the second feature and a 3rd channel of the 2nd sub-feature of the second feature; the 3rd third feature includes a 3rd channel of the 1st sub-feature of the second feature and a 2nd channel of the 2nd sub-feature of the second feature; and the 4th third feature includes a 4th channel of the 1st sub-feature of the second feature and a 1st channel of the 2nd sub-feature of the second feature.

In a possible embodiment of the foregoing implementation, when K=4, C/2 channels of a 1st third feature include a 1st channel of each sub-feature in the first portion of sub-features, and remaining C/2 channels of the 1st third feature include a 3rd channel of each sub-feature in the second portion of sub-features; C/2 channels of a 2nd third feature include a 2nd channel of each sub-feature in the first portion of sub-features, and remaining C/2 channels of the 2nd third feature include a 4th channel of each sub-feature in the second portion of sub-features; C/2 channels of a 3rd third feature include a 3rd channel of each sub-feature in the first portion of sub-features, and remaining C/2 channels of the 3rd third feature include a 2nd channel of each sub-feature in the second portion of sub-features; and C/2 channels of a 4th third feature include a 4th channel of each sub-feature in the first portion of sub-features, and remaining C/2 channels of the 4th third feature include a 1st channel of each sub-feature in the second portion of sub-features.

In a possible embodiment of the foregoing implementation, when K=4, C/2 channels of a 1st third feature include a 1st channel of each sub-feature in the first portion of sub-features, and remaining C/2 channels of the 1st third feature include a 4th channel of each sub-feature in the second portion of sub-features; C/2 channels of a 2nd third feature include a 2nd channel of each sub-feature in the first portion of sub-features, and remaining C/2 channels of the 2nd third feature include a 3rd channel of each sub-feature in the second portion of sub-features; C/2 channels of a 3rd third feature include a 3rd channel of each sub-feature in the first portion of sub-features, and remaining C/2 channels of the 3rd third feature include a 1st channel of each sub-feature in the second portion of sub-features; and C/2 channels of a 4th third feature include a 4th channel of each sub-feature in the first portion of sub-features, and remaining C/2 channels of the 4th third feature include a 2nd channel of each sub-feature in the second portion of sub-features.

In a possible embodiment of the foregoing implementation, when K=3, shapes of a 1st third feature and a 2nd third feature are [C, h/2, w/2], and a shape of a 3rd third feature is [2C, h/2, w/2]; C/2 channels of the 1st third feature include a 1st channel of each sub-feature in the first portion of sub-features, and remaining C/2 channels of the 1st third feature include a 4th channel of each sub-feature in the second portion of sub-features; C/2 channels of the 2nd third feature include a 2nd channel of each sub-feature in the first portion of sub-features, and remaining C/2 channels of the 2nd third feature include a 3rd channel of each sub-feature in the second portion of sub-features; and C channels of the 3rd third feature include a 3rd channel and a 4th channel of each sub-feature in the first portion of sub-features, and remaining C channels of the 3rd third feature include a 1st channel and a 2nd channel of each sub-feature in the second portion of sub-features.

In a possible implementation of the first aspect, K=4, and a concatenation manner of the third feature is as follows: A 1st third feature includes a $4c$th channel of a 1st sub-feature and a $(4c+2)$th channel of a 2nd sub-feature; a 2nd third feature includes a $(4c+1)$th channel of the 1st sub-feature and a $(4c+3)$th channel of the 2nd sub-feature; a 3rd third feature includes a $(4c+2)$th channel of the 1st sub-feature and a $4c$th channel of the 2nd sub-feature, and a 4th third feature includes a $(4c+3)$th channel of the 1st sub-feature and a $(4c+1)$th channel of the 2nd sub-feature. c is an integer, and number indexes start from 0.

In a possible implementation of the first aspect, K=4, and a shape of each of the K third features is [C, h/2, w/2].

In a possible implementation of the first aspect, K=3, shapes of two third features in the K third features are [C, h/2, w/2], and a shape of one third feature in the K third features is [2C, h/2, w/2]. In this application, a third feature whose quantity of channels is 2C is not limited to a specific third feature in the K third features, and may be the 1st third feature, the 2nd third feature, or the 3rd third feature.

In a possible implementation of the first aspect, encoding or decoding the picture based on the K third features includes: for k=1, 2, ..., and K, separately predicting a $k$th portion of a latent variable of the picture based on the $k$th third feature by using a context model; and encoding or decoding the picture based on a total of K portions of the latent variable. Specifically, on an encoder side, the K portions of the latent variable that are obtained through prediction may be combined into a complete predicted latent variable, a residual of the latent variable is obtained by calculating a difference between the original latent variable and the predicted latent variable, and then entropy encoding is performed on the residual of the latent variable to obtain a bitstream. On a decoder side, the K portions of the latent variable that are obtained through prediction may be combined into a complete predicted latent variable, entropy decoding is performed on a bitstream to obtain a residual of the latent variable, the predicted latent variable and the residual of the latent variable obtained through decoding are summed to obtain the latent variable, and then a decoder decodes the latent variable to obtain a reconstructed picture.

In a possible implementation of the first aspect, the first feature represents a luminance component and/or a chrominance component of the picture. When the luminance component and the chrominance component of the picture are represented by using different first features, concatenation manners of third features respectively corresponding to the luminance component and the chrominance component of the picture may be the same or may be different.

When the method in the first aspect is implemented by an encoder, that is, when the method in the first aspect is an encoding method, the method further includes: encoding a first syntax element, where the first syntax element indicates a concatenation manner used for the third feature.

When the method in the first aspect is implemented by a decoder, that is, when the method in the first aspect is a decoding method, the method further includes: decoding a first syntax element, where the first syntax element indicates a concatenation manner used for the third feature.

In a possible implementation, the first syntax element is encoded in a picture header (picture header), a model header (model header), or a tools header (tools header) of a bitstream.

In a possible implementation of the first aspect, if the encoder side and the decoder side agree that the concatenation manner used for the third feature is a specific concatenation manner in Table 1, the first syntax element does not need to be transmitted.

According to a second aspect, this application provides a picture encoding apparatus. The apparatus includes: an obtaining module, configured to obtain a first feature of a picture, where a shape of the first feature is [C, h, w], C represents a quantity of channels of the first feature, h represents a length of the first feature, w represents a width of the first feature, C, h, and w are all positive integer multiples of 2, each channel of the first feature includes $(h/2) \times (w/2)$ $2 \times 2$ pixel blocks, and each pixel block includes four pixels: an upper left pixel, a lower right pixel, an upper right pixel, and a lower left pixel; a processing module, configured to shuffle the first feature to obtain a second feature, where a shape of the second feature is [4C, h/2, w/2], the second feature includes C sub-features, a shape of each sub-feature is [4, h/2, w/2], a $c^{th}$ sub-feature of the second feature corresponds to a $c^{th}$ channel of the first feature, c is a positive integer, $1 \leq c \leq C$, and four channels of the $c^{th}$ sub-feature respectively include upper left pixels, lower right pixels, upper right pixels, and lower left pixels in all pixel blocks of the $c^{th}$ channel of the first feature, where the processing module is further configured to concatenate the second feature to obtain K third features, where a shape of a $k^{th}$ third feature is [C, h/2, w/2], the $k^{th}$ third feature includes one channel of each sub-feature of the second feature, K is a positive integer greater than 2, k is a positive integer, and $1 \leq k \leq K$; and an encoding module, configured to encode the picture based on the K third features.

In a possible implementation of the second aspect, N pixels at a same location in N channels of the $k^{th}$ third feature have different locations in N channels of the first feature, where N is a positive integer and $2 \leq N \leq C$.

In a possible implementation of the second aspect, C/2 channels of the $k^{th}$ third feature include an $i^{th}$ channel of each sub-feature in a first portion of sub-features of the second feature, remaining C/2 channels of the $k^{th}$ third feature include a $j^{th}$ channel of each sub-feature in a second portion of sub-features of the second feature, i and j are positive integers, $1 \leq i \leq 4$, $1 \leq j \leq 4$, $i \neq j$, the first portion of sub-features and the second portion of sub-features each include C/2 sub-features of the second feature, and the first portion of sub-features and the second portion of sub-features jointly form the second feature.

In an embodiment of the implementation, when K=4, C/2 channels of a $1^{st}$ third feature include a $1^{st}$ channel of each sub-feature in the first portion of sub-features, and remaining C/2 channels of the $1^{st}$ third feature include a $3^{rd}$ channel of each sub-feature in the second portion of sub-features; C/2 channels of a $2^{nd}$ third feature include a $2^{nd}$ channel of each sub-feature in the first portion of sub-features, and remaining C/2 channels of the $2^{nd}$ third feature include a $4^{th}$ channel of each sub-feature in the second portion of sub-features; C/2 channels of a $3^{rd}$ third feature include a $3^{rd}$ channel of each sub-feature in the first portion of sub-features, and remaining C/2 channels of the $3^{rd}$ third feature include a $1^{st}$ channel of each sub-feature in the second portion of sub-features; and C/2 channels of a $4^{th}$ third feature include a $4^{th}$ channel of each sub-feature in the first portion of sub-features, and remaining C/2 channels of the $4^{th}$ third feature include a $2^{nd}$ channel of each sub-feature in the second portion of sub-features. When C=2, the $1^{st}$ third feature includes a $1^{st}$ channel of a $1^{st}$ sub-feature of the second feature and a $3^{rd}$ channel of a $2^{nd}$ sub-feature of the second feature; the $2^{nd}$ third feature includes a $2^{nd}$ channel of the $1^{st}$ sub-feature of the second feature and a $4^{th}$ channel of the $2^{nd}$ sub-feature of the second feature; the $3^{rd}$ third feature includes a $3^{rd}$ channel of the $1^{st}$ sub-feature of the second feature and a $1^{st}$ channel of the $2^{nd}$ sub-feature of the second feature; and the $4^{th}$ third feature includes a $4^{th}$ channel of the $1^{st}$ sub-feature of the second feature and a $2^{nd}$ channel of the $2^{nd}$ sub-feature of the second feature.

In another embodiment of the implementation, when K=4, C/2 channels of a $1^{st}$ third feature include a $1^{st}$ channel of each sub-feature in the first portion of sub-features, and remaining C/2 channels of the $1^{st}$ third feature include a $4^{th}$ channel of each sub-feature in the second portion of sub-features; C/2 channels of a $2^{nd}$ third feature include a $2^{nd}$ channel of each sub-feature in the first portion of sub-features, and remaining C/2 channels of the $2^{nd}$ third feature include a $3^{rd}$ channel of each sub-feature in the second portion of sub-features; C/2 channels of a $3^{rd}$ third feature include a $3^{rd}$ channel of each sub-feature in the first portion of sub-features, and remaining C/2 channels of the $3^{rd}$ third feature include a $2^{nd}$ channel of each sub-feature in the second portion of sub-features; and C/2 channels of a $4^{th}$ third feature include a $4^{th}$ channel of each sub-feature in the first portion of sub-features, and remaining C/2 channels of the $4^{th}$ third feature include a

1st channel of each sub-feature in the second portion of sub-features.

In another embodiment of the implementation, when K=4, C/2 channels of a 1st third feature include a 1st channel of each sub-feature in the first portion of sub-features, and remaining C/2 channels of the 1st third feature include a 3rd channel of each sub-feature in the second portion of sub-features; C/2 channels of a 2nd third feature include a 2nd channel of each sub-feature in the first portion of sub-features, and remaining C/2 channels of the 2nd third feature include a 4th channel of each sub-feature in the second portion of sub-features; C/2 channels of a 3rd third feature include a 3rd channel of each sub-feature in the first portion of sub-features, and remaining C/2 channels of the 3rd third feature include a 2nd channel of each sub-feature in the second portion of sub-features; and C/2 channels of a 4th third feature include a 4th channel of each sub-feature in the first portion of sub-features, and remaining C/2 channels of the 4th third feature include a 1st channel of each sub-feature in the second portion of sub-features.

In another embodiment of the implementation, when K=4, C/2 channels of a 1st third feature include a 1st channel of each sub-feature in the first portion of sub-features, and remaining C/2 channels of the 1st third feature include a 4th channel of each sub-feature in the second portion of sub-features; C/2 channels of a 2nd third feature include a 2nd channel of each sub-feature in the first portion of sub-features, and remaining C/2 channels of the 2nd third feature include a 3rd channel of each sub-feature in the second portion of sub-features; C/2 channels of a 3rd third feature include a 3rd channel of each sub-feature in the first portion of sub-features, and remaining C/2 channels of the 3rd third feature include a 1st channel of each sub-feature in the second portion of sub-features; and C/2 channels of a 4th third feature include a 4th channel of each sub-feature in the first portion of sub-features, and remaining C/2 channels of the 4th third feature include a 2nd channel of each sub-feature in the second portion of sub-features.

In another embodiment of the implementation, when K=3, shapes of a 1st third feature and a 2nd third feature are [C, h/2, w/2], and a shape of a 3rd third feature is [2C, h/2, w/2]; C/2 channels of the 1st third feature include a 1st channel of each sub-feature in the first portion of sub-features, and remaining C/2 channels of the 1st third feature include a 4th channel of each sub-feature in the second portion of sub-features; C/2 channels of the 2nd third feature include a 2nd channel of each sub-feature in the first portion of sub-features, and remaining C/2 channels of the 2nd third feature include a 3rd channel of each sub-feature in the second portion of sub-features; and C channels of the 3rd third feature include a 3rd channel and a 4th channel of each sub-feature in the first portion of sub-features, and remaining C channels of the 3rd third feature include a 1st channel and a 2nd channel of each sub-feature in the second portion of sub-features.

In a possible implementation of the second aspect, K=4, and a shape of each of the K third features is [C, h/2, w/2].

In a possible implementation of the second aspect, K=3, shapes of two third features in the K third features are [C, h/2, w/2], and a shape of one third feature in the K third features is [2C, h/2, w/2].

In a possible implementation of the second aspect, encoding the picture based on the K third features includes:

for k=1, 2, ..., and K, separately predicting a $k^{th}$ portion of a latent variable of the picture based on the $k^{th}$ third feature by using a context model; and encoding the picture based on a total of K portions of the latent variable. Specifically, the K portions of the latent variable that are obtained through prediction may be combined into a complete predicted latent variable, a residual of the latent variable is obtained by calculating a difference between the original latent variable and the predicted latent variable, and then entropy encoding is performed on the residual of the latent variable to obtain a bitstream.

In a possible implementation of the second aspect, the first feature represents a luminance component and/or a chrominance component of the picture.

In a possible implementation of the second aspect, the following is further included: encoding a first syntax element, where the first syntax element indicates a concatenation manner used for the third feature. The first syntax element is encoded in a picture header (picture header), a model header (model header), or a tools header (tools header) of a bitstream.

For technical effects of any one of the second aspect and the implementations of the second aspect, refer to the descriptions of the first aspect and the implementations of the first aspect. Details are not described herein again.

According to a third aspect, this application provides a picture decoding apparatus. The apparatus includes: an obtaining module, configured to obtain a first feature of a picture, where a shape of the first feature is [C, h, w], C represents a quantity of channels of the first feature, h represents a length of the first feature, w represents a width of the first feature, C, h, and w are all positive integer multiples of 2, each channel of the first feature includes $(h/2) \times (w/2)$ $2 \times 2$ pixel blocks, and each pixel block includes four pixels: an upper left pixel, a lower right pixel, an upper right pixel, and a lower left pixel; a processing module, configured to shuffle the first feature to obtain a second feature, where a shape of the second feature is [4C, h/2, w/2], the second feature includes C sub-features, a shape of each sub-feature is [4, h/2, w/2], a $c^{th}$ sub-feature of the second feature corresponds to a $c^{th}$ channel of the first feature, c is a positive integer, $1 \le c \le C$, and four channels of the $c^{th}$ sub-feature respectively include upper left pixels, lower right pixels, upper right pixels, and lower left pixels in all pixel blocks of the $c^{th}$ channel of the first feature, where the processing module is further configured to concatenate the second feature to obtain K third features, where a shape of a $k^{th}$ third feature is [C, h/2, w/2], the $k^{th}$ third feature includes one channel of each sub-feature of the second feature, K is a positive integer greater than 2, k is a positive integer, and $1 \le k \le K$; and a decoding module, configured to perform decoding based on the K third features to obtain a reconstructed picture.

In a possible implementation of the third aspect, N pixels at a same location in N channels of the $k^{th}$ third feature have different locations in N channels of the first feature, where N is a positive integer and $2 \leq N \leq C$.

In a possible implementation of the third aspect, C/2 channels of the $k^{th}$ third feature include an $i^{th}$ channel of each sub-feature in a first portion of sub-features of the second feature, remaining C/2 channels of the $k^{th}$ third feature include a $j^{th}$ channel of each sub-feature in a second portion of sub-features of the second feature, i and j are positive integers, $1 \leq i \leq 4$, $1 \leq j \leq 4$, $i \neq j$, the first portion of sub-features and the second portion of sub-features each include C/2 sub-features of the second feature, and the first portion of sub-features and the second portion of sub-features jointly form the second feature.

In an embodiment of the implementation, when K=4, C/2 channels of a $1^{st}$ third feature include a $1^{st}$ channel of each sub-feature in the first portion of sub-features, and remaining C/2 channels of the $1^{st}$ third feature include a $3^{rd}$ channel of each sub-feature in the second portion of sub-features; C/2 channels of a $2^{nd}$ third feature include a $2^{nd}$ channel of each sub-feature in the first portion of sub-features, and remaining C/2 channels of the $2^{nd}$ third feature include a $4^{th}$ channel of each sub-feature in the second portion of sub-features; C/2 channels of a $3^{rd}$ third feature include a $3^{rd}$ channel of each sub-feature in the first portion of sub-features, and remaining C/2 channels of the $3^{rd}$ third feature include a $1^{st}$ channel of each sub-feature in the second portion of sub-features; and C/2 channels of a $4^{th}$ third feature include a $4^{th}$ channel of each sub-feature in the first portion of sub-features, and remaining C/2 channels of the $4^{th}$ third feature include a $2^{nd}$ channel of each sub-feature in the second portion of sub-features. When C=2, the $1^{st}$ third feature includes a $1^{st}$ channel of a $1^{st}$ sub-feature of the second feature and a $3^{rd}$ channel of a $2^{nd}$ sub-feature of the second feature; the $2^{nd}$ third feature includes a $2^{nd}$ channel of the $1^{st}$ sub-feature of the second feature and a $4^{th}$ channel of the $2^{nd}$ sub-feature of the second feature; the $3^{rd}$ third feature includes a $3^{rd}$ channel of the $1^{st}$ sub-feature of the second feature and a $1^{st}$ channel of the $2^{nd}$ sub-feature of the second feature; and the $4^{th}$ third feature includes a $4^{th}$ channel of the $1^{st}$ sub-feature of the second feature and a $2^{nd}$ channel of the $2^{nd}$ sub-feature of the second feature.

In another embodiment of the implementation, when K=4, C/2 channels of a $1^{st}$ third feature include a $1^{st}$ channel of each sub-feature in the first portion of sub-features, and remaining C/2 channels of the $1^{st}$ third feature include a $4^{th}$ channel of each sub-feature in the second portion of sub-features; C/2 channels of a $2^{nd}$ third feature include a $2^{nd}$ channel of each sub-feature in the first portion of sub-features, and remaining C/2 channels of the $2^{nd}$ third feature include a $3^{rd}$ channel of each sub-feature in the second portion of sub-features; C/2 channels of a $3^{rd}$ third feature include a $3^{rd}$ channel of each sub-feature in the first portion of sub-features, and remaining C/2 channels of the $3^{rd}$ third feature include a $2^{nd}$ channel of each sub-feature in the second portion of sub-features; and C/2 channels of a $4^{th}$ third feature include a $4^{th}$ channel of each sub-feature in the first portion of sub-features, and remaining C/2 channels of the $4^{th}$ third feature include a $1^{st}$ channel of each sub-feature in the second portion of sub-features.

In another embodiment of the implementation, when K=4, C/2 channels of a $1^{st}$ third feature include a $1^{st}$ channel of each sub-feature in the first portion of sub-features, and remaining C/2 channels of the $1^{st}$ third feature include a $3^{rd}$ channel of each sub-feature in the second portion of sub-features; C/2 channels of a $2^{nd}$ third feature include a $2^{nd}$ channel of each sub-feature in the first portion of sub-features, and remaining C/2 channels of the $2^{nd}$ third feature include a $4^{th}$ channel of each sub-feature in the second portion of sub-features; C/2 channels of a $3^{rd}$ third feature include a $3^{rd}$ channel of each sub-feature in the first portion of sub-features, and remaining C/2 channels of the $3^{rd}$ third feature include a $2^{nd}$ channel of each sub-feature in the second portion of sub-features; and C/2 channels of a $4^{th}$ third feature include a $4^{th}$ channel of each sub-feature in the first portion of sub-features, and remaining C/2 channels of the $4^{th}$ third feature include a $1^{st}$ channel of each sub-feature in the second portion of sub-features.

In another embodiment of the implementation, when K=4, C/2 channels of a $1^{st}$ third feature include a $1^{st}$ channel of each sub-feature in the first portion of sub-features, and remaining C/2 channels of the $1^{st}$ third feature include a $4^{th}$ channel of each sub-feature in the second portion of sub-features; C/2 channels of a $2^{nd}$ third feature include a $2^{nd}$ channel of each sub-feature in the first portion of sub-features, and remaining C/2 channels of the $2^{nd}$ third feature include a $3^{rd}$ channel of each sub-feature in the second portion of sub-features; C/2 channels of a $3^{rd}$ third feature include a $3^{rd}$ channel of each sub-feature in the first portion of sub-features, and remaining C/2 channels of the $3^{rd}$ third feature include a $1^{st}$ channel of each sub-feature in the second portion of sub-features; and C/2 channels of a $4^{th}$ third feature include a $4^{th}$ channel of each sub-feature in the first portion of sub-features, and remaining C/2 channels of the $4^{th}$ third feature include a $2^{nd}$ channel of each sub-feature in the second portion of sub-features.

In another embodiment of the implementation, when K=3, shapes of a $1^{st}$ third feature and a $2^{nd}$ third feature are [C, h/2, w/2], and a shape of a $3^{rd}$ third feature is [2C, h/2, w/2]; C/2 channels of the $1^{st}$ third feature include a $1^{st}$ channel of each sub-feature in the first portion of sub-features, and remaining C/2 channels of the $1^{st}$ third feature include a $4^{th}$ channel of each sub-feature in the second portion of sub-features; C/2 channels of the $2^{nd}$ third feature include a $2^{nd}$ channel of each sub-feature in the first portion of sub-features, and remaining C/2 channels of the $2^{nd}$ third feature include a $3^{rd}$ channel of each sub-feature in the second portion of sub-features; and C channels of the $3^{rd}$ third feature include a $3^{rd}$ channel and a $4^{th}$ channel of each sub-feature in the first portion of sub-features, and remaining C channels of the $3^{rd}$ third feature include a $1^{st}$ channel and a $2^{nd}$ channel of each sub-feature in the second portion of sub-features.

In a possible implementation of the third aspect, K=4, and a shape of each of the K third features is [C, h/2, w/2].

In a possible implementation of the third aspect, K=3, shapes of two third features in the K third features are [C, h/2, w/2], and a shape of one third feature in the K third features is [2C, h/2, w/2].

In a possible implementation of the third aspect, performing decoding based on the K third features includes:

for k=1, 2, ..., and K, separately predicting a k$^{th}$ portion of a latent variable of the picture based on the k$^{th}$ third feature by using a context model; and performing encoding based on a total of K portions of the latent variable to obtain the reconstructed picture. Specifically, the K portions of the latent variable that are obtained through prediction may be combined into a complete predicted latent variable, entropy decoding is performed on a bitstream to obtain a residual of the latent variable, the predicted latent variable and the residual of the latent variable obtained through decoding are summed to obtain the latent variable, and then a decoder decodes the latent variable to obtain the reconstructed picture.

In a possible implementation of the third aspect, the first feature represents a luminance component and/or a chrominance component of the picture.

In a possible implementation of the third aspect, the following is further included: decoding a first syntax element, where the first syntax element indicates a concatenation manner used for the third feature. The first syntax element is encoded in a picture header (picture header), a model header (model header), or a tools header (tools header) of a bitstream.

For technical effects of any one of the third aspect and the implementations of the third aspect, refer to the descriptions of the first aspect and the implementations of the first aspect. Details are not described herein again.

According to a fourth aspect, this application provides an encoding or decoding device, including a processor. The processor is coupled to a memory, the memory is configured to store a program or instructions, and when the program or the instructions are executed by the processor, the encoding or decoding device is enabled to perform the method according to any one of the first aspect and the implementations of the first aspect.

For technical effects of any one of the fourth aspect and the implementations of the fourth aspect, refer to the descriptions of the first aspect and the implementations of the first aspect. Details are not described herein again.

According to a fifth aspect, this application provides an encoding and decoding system. The encoding and decoding system includes the encoding apparatus according to any one of the second aspect and the implementations of the second aspect, and/or the decoding apparatus according to any one of the third aspect and the implementations of the third aspect.

For technical effects of any one of the fifth aspect and the implementations of the fifth aspect, refer to the descriptions of the first aspect and the implementations of the first aspect. Details are not described herein again.

According to a sixth aspect, this application provides a computer-readable storage medium. The medium stores computer-readable instructions, and when the computer-readable instructions are executed by a computer, the method according to any one of the first aspect and the implementations of the first aspect is implemented.

For technical effects of any one of the sixth aspect and the implementations of the sixth aspect, refer to the descriptions of the first aspect and the implementations of the first aspect. Details are not described herein again.

According to a seventh aspect, this application provides a computer program product, including computer-readable instructions. When the computer-readable instructions are run on a computer, the computer is enabled to perform the method according to any one of the first aspect and the implementations of the first aspect.

For technical effects of any one of the seventh aspect and the implementations of the seventh aspect, refer to the descriptions of the first aspect and the implementations of the first aspect. Details are not described herein again.

According to an eighth aspect, this application provides a computer-readable storage medium. The computer-readable storage medium stores a bitstream obtained through encoding by using the encoding method according to any one of the first aspect and the implementations of the first aspect.

For technical effects of any one of the eighth aspect and the implementations of the eighth aspect, refer to the descriptions of the first aspect and the implementations of the first aspect. Details are not described herein again.

According to a ninth aspect, this application provides a bitstream storage device, including at least one storage medium and a communication interface. The communication interface is configured to receive or send a bitstream, the at least one storage medium is configured to store the bitstream, and the bitstream is obtained by an encoder through encoding by using the encoding method according to any one of the first aspect and the implementations of the first aspect.

For technical effects of any one of the ninth aspect and the implementations of the ninth aspect, refer to the descriptions of the first aspect and the implementations of the first aspect. Details are not described herein again.

According to a tenth aspect, this application provides a bitstream storage method, including: receiving a bitstream through a communication interface; and storing the bitstream in one or more storage media, where the bitstream is obtained by an encoder through encoding by using the encoding method according to any one of the first aspect and the implementations of the first aspect.

For technical effects of any one of the tenth aspect and the implementations of the tenth aspect, refer to the descriptions of the first aspect and the implementations of the first aspect. Details are not described herein again.

According to an eleventh aspect, this application provides a bitstream delivery system, including at least one storage medium and a video stream device. The at least one storage medium is configured to store a bitstream, and the bitstream is obtained by an encoder through encoding by using the encoding method according to any one of the first aspect and the implementations of the first aspect; and the video stream device is configured to respond to a request of a decoder, so that the bitstream in the at least one storage medium is sent to the decoder.

For technical effects of any one of the eleventh aspect and the implementations of the eleventh aspect, refer to the descriptions of the first aspect and the implementations of the first aspect. Details are not described herein again.

According to a twelfth aspect, this application provides a bitstream distribution method, including: receiving a first request; selecting a bitstream from at least one storage medium in response to the first request; and sending the bitstream to a destination device, where the at least one storage medium is configured to store the bitstream, and the bitstream is obtained by an encoder through encoding by using the encoding method according to any one of the first aspect and the implementations of the first aspect.

For technical effects of any one of the twelfth aspect and the implementations of the twelfth aspect, refer to the descriptions of the first aspect and the implementations of the first aspect. Details are not described herein again.

According to a thirteenth aspect, this application provides a bitstream processing system, including a picture source device, an encoder device, one or more storage media, and a destination device. The picture source device is configured to provide picture data; the encoder device is configured to obtain the picture data from the picture source device through an interface, and encode the picture data to obtain one or more bitstreams, where the bitstreams are obtained by the encoder through encoding by using the encoding method according to any one of the first aspect and the implementations of the first aspect; the encoder device is configured to store the one or more bitstreams in the one or more storage media; or the encoder device is configured to encapsulate the one or more bitstreams to obtain a transmission bitstream; the encoder device is configured to transmit the transmission bitstream to the destination device through a communication link or a communication network; the destination device is configured to decapsulate the transmission bitstream to obtain the one or more bitstreams; and the destination device is configured to decode the one or more bitstreams to obtain decoded data.

For technical effects of any one of the thirteenth aspect and the implementations of the thirteenth aspect, refer to the descriptions of the first aspect and the implementations of the first aspect. Details are not described herein again.

BRIEF DESCRIPTION OF DRAWINGS

FIG. 1a is a diagram of an application scenario according to an embodiment of this application;
FIG. 1b is a diagram of an application scenario according to an embodiment of this application;
FIG. 1c is a diagram of an application scenario according to an embodiment of this application;
FIG. 2a is a diagram of an AI encoding unit and an AI decoding unit according to an embodiment of this application;
FIG. 2b shows a hardware structure of a chip according to an embodiment of this application;
FIG. 3 is a flowchart of an encoding or decoding method according to an embodiment of this application;
FIG. 4a is a diagram of an encoding or decoding method according to an embodiment of this application;
FIG. 4b is a diagram of an encoding or decoding method according to an embodiment of this application;
FIG. 4c is a diagram of an encoding or decoding method according to an embodiment of this application;
FIG. 4d is a diagram of an encoding or decoding method according to an embodiment of this application;
FIG. 4e is a diagram of an encoding or decoding method according to an embodiment of this application;
FIG. 4f is a diagram of an encoding or decoding method according to an embodiment of this application;
FIG. 5 is a diagram of a structure of a picture encoding apparatus according to an embodiment of this application;
FIG. 6 is a diagram of a structure of a picture decoding apparatus according to an embodiment of this application;
FIG. 7 is a diagram of a structure of a device according to an embodiment of this application; and
FIG. 8 is a diagram of a structure of a device according to an embodiment of this application.

DESCRIPTION OF EMBODIMENTS

The following clearly and completely describes the technical solutions in embodiments of this application with reference to the accompanying drawings in embodiments of this application. It is clear that the described embodiments are some rather than all of embodiments of this application. Based on embodiments of this application, all other embodiments obtained by a person of ordinary skill in the art without creative efforts fall within the protection scope of this application.

The term "and/or" in this specification is merely an association relationship of associated objects, and indicates that three relationships may exist. For example, A and/or B may indicate the following three cases: Only A exists, both A and B exist, and only B exists.

The terms "first" and "second" in the specification and claims of embodiments of this application are used to distinguish between different objects, but are not used to describe a specific sequence of objects. For example, a first target object and a second target object are used to distinguish between different target objects, but are not used to describe a specific sequence of the target objects.

In embodiments of this application, words such as "example" or "for example" are used to represent giving examples, illustrations, or descriptions. Any embodiment or design solution described as "example" or "for example" in embodiments of this application should not be construed as being more preferred or advantageous than other embodiments or design solutions. Specifically, the words such as "example" or "for example" are used to present related concepts in a specific manner.

In descriptions of embodiments of this application, unless otherwise stated, "a plurality of" means two or more. For example, a plurality of processing units refer to two or more processing units, and a plurality of systems refer to two or more systems.

For ease of understanding, the following first describes some basic concepts in this application.

Tensor: is a high-dimensional matrix. A 3-dimensional tensor means that a tensor is divided into three dimensions (a quantity of channels, a height, and a width). A shape (shape) or a size (size) of the tensor is usually expressed as [C, H, W], where C represents the quantity of channels, H represents the height, and W represents the width.

Latent variable: is a tensor formed after data is transformed by an encoder, and may be transformed by a decoder to restore original data or data similar to the original data. Generally, the latent variable is a 3-dimensional tensor. Each dimension represents one of a length, a width, and a quantity of channels.

Entropy encoding: is a process of transforming data into a 0/1 character string.

Entropy decoding: is a process of restoring a 0/1 character string to data, and is a reverse process of encoding.

Encoder: is a model that transforms data (such as a picture or a video) into a latent variable.

Decoder: is a model that restores a latent variable to original data.

Hyper encoder: is a model that further encodes a latent variable into a hyper latent variable.

Hyper decoder: is a model that decodes and restores a hyper latent variable to a latent variable, and includes a hyper decoding prediction model and a hyper-scale decoding model.

Hyper-scale decoding model: is a model that restores a hyper latent variable to a scale variable. The scale variable is used as a condition input of entropy decoding, a residual is output, and the residual, an output of a hyper decoder, and an output of a context model are used to obtain a latent variable.

Context model: restores a latent variable into several portions. A part of the latent variable is output in each portion. A result in each portion is determined by an output of a hyper decoder, an output of a hyper-scale decoding model, and some results of a previously predicted latent variable.

Pixel concatenation/shuffle (pixel-shuffle, also referred to as down-shuffle): is a simple operator that rearranges locations of elements of a three-dimensional tensor such as a latent variable, halves a length and a width, and increases a quantity of channels to four times the original quantity.

Because embodiments of this application relate to wide application of a neural network, for ease of understanding, the following first describes terms and concepts related to the neural network that may be used in embodiments of this application.

(1) Neural network

The neural network may include a neuron, and the neuron may be an arithmetic unit that uses $x_s$ and an intercept 1 as an input. An output of the arithmetic unit may be:

$$h_{W,b}(x) = f(W^T x) = f\left(\sum_{s=1}^{n} W_s x_s + b\right)$$

s=1, 2, ..., or n, n is a natural number greater than 1, $W_s$ is a weight of $x_s$, and b is a bias of the neuron. f is an activation function (activation functions) of the neuron, and is used to introduce a non-linear feature into the neural network to convert an input signal in the neuron into an output signal. The output signal of the activation function may be used as an input of a next convolutional layer, and the activation function may be a sigmoid function. The neural network is a network constituted by linking a plurality of single neurons together. To be specific, an output of a neuron may be an input of another neuron. An input of each neuron may be connected to a local receptive field of a previous layer to extract a feature of the local receptive field. The local receptive field may be a region including several neurons.

(2) Deep neural network

The deep neural network (deep neural network, DNN), also referred to as a multi-layer neural network, may be understood as a neural network having a plurality of hidden layers. The DNN is divided based on locations of different layers. Neural networks in the DNN may be classified into three types: an input layer, a hidden layer, and an output layer. Generally, a first layer is an input layer, a last layer is an output layer, and intermediate layers are all hidden layers. The layers are fully connected. To be specific, any neuron at an $i^{th}$ layer is necessarily connected to any neuron at an $(i+1)^{th}$ layer.

Although the DNN seems to be very complex, work of each layer is not complex, and is briefly the following linear relational expression: $\vec{y} = \alpha\left(W \cdot \vec{x} + \vec{b}\right)$, where $\vec{x}$ is an input vector, $\vec{y}$ is an output vector, $\vec{b}$ is a bias vector, W is a weight matrix (also referred to as a coefficient), and $\alpha()$ is an activation function. At each layer, the output vector $\vec{x}$ is obtained by performing such a simple operation on the input vector $\vec{y}$. Because the DNN has a large quantity of layers, there are a large quantity of coefficients W and a large quantity of bias vectors $\vec{b}$. These parameters are defined as follows in the DNN: The coefficient W is used as an example. It is assumed that in a three-layer DNN, a linear coefficient from a fourth neuron at a second layer to a second neuron at a third layer is defined as $W_{24}^3$. The superscript 3 represents a layer at which the coefficient W is located, and the subscript corresponds to an output third-layer index 2 and an input second-layer index 4.

In conclusion, a coefficient from a $k^{th}$ neuron at an $(L-1)^{th}$ layer to a $j^{th}$ neuron at an $L^{th}$ layer is defined as $W_{jk}^L$.

It should be noted that there is no parameter W at the input layer. In the deep neural network, more hidden layers make the network more capable of describing a complex case in the real world. Theoretically, a model with more parameters has higher complexity and a larger "capacity". This indicates that the model can complete a more complex learning task. Training the deep neural network is a process of learning a weight matrix, and a final objective of training is to obtain weight matrices (weight matrices including vectors W of many layers) of all layers of the trained deep neural network.

(3) Convolutional neural network

The convolutional neural network (convolutional neuron network, CNN) is a deep neural network with a convolutional structure. The convolutional neural network includes a feature extractor that includes a convolutional layer and a subsampling layer, and the feature extractor may be considered as a filter. The convolutional layer is a neuron layer that is in the convolutional neural network and at which convolution processing is performed on an input signal. At the convolutional layer of the convolutional neural network, one neuron may be connected to only some adjacent-layer neurons. One convolutional layer usually includes several feature maps, and each feature map may include some neurons that are in a rectangular arrangement. Neurons on a same feature map share a weight, and the weight shared herein is a convolution kernel. Weight sharing may be understood as that an image information extraction manner is irrelevant to a location. The convolution kernel may be initialized in a form of a matrix with a random size. In a training process of the convolutional neural network, the convolution kernel may obtain an appropriate weight through learning. In addition, benefits directly brought by weight sharing are that connections between layers of the convolutional neural network are reduced, and an overfitting risk is reduced.

(4) Concatenation Concat

A concatenation operation is to concatenate a plurality of tensors in a specific dimension. All tensors need to have a same shape (other than the concatenation dimension). In this patent, the concatenation operation means concatenation on channels.

(5) Bit rate: indicates an average encoding length required for encoding a unit pixel in a picture compression task.

(6) Rate-distortion performance: is an indicator used to measure performance of a compression algorithm. A bit rate and decoded picture distortion are comprehensively considered.

The following describes an application scenario to which the method provided in embodiments of this application is applicable.

The method provided in embodiments of this application may be applied to service scenarios such as a public cloud, a private cloud, video surveillance, a live streaming technology, storage, and transmission. The method provided in embodiments of this application may be implemented as a picture file type or a storage standard, or a picture data transmission protocol, or compression software or a storage device.

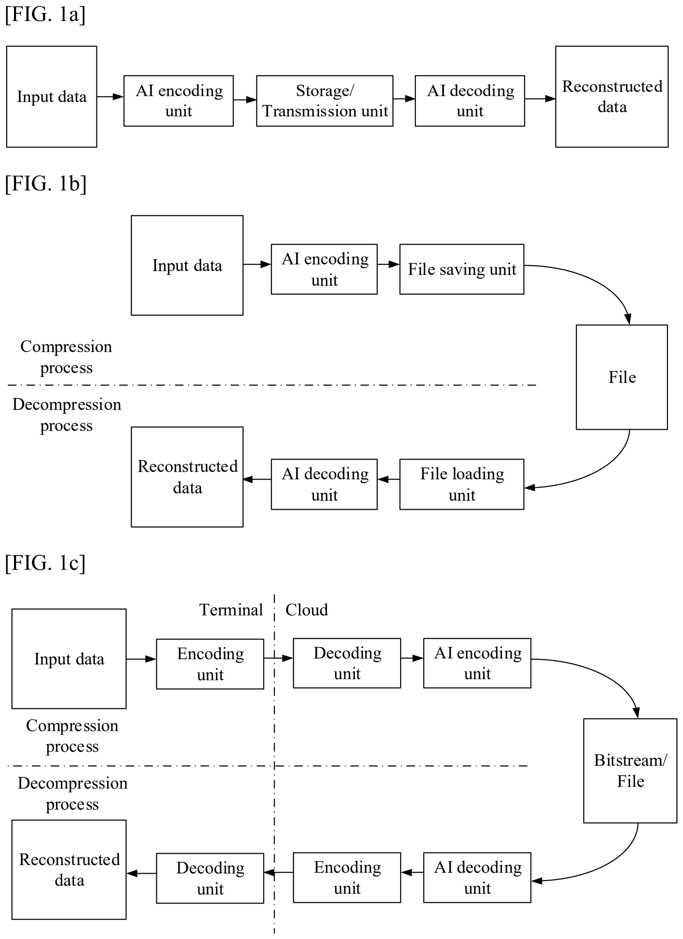

FIG. 1a shows an example of an application scenario according to an embodiment of this application. The application scenario may also be understood as an encoding and decoding application scenario. The application scenario includes an AI encoding unit, a storage/transmission unit, and an AI decoding unit. The method provided in embodiments of this application may be applied to the AI encoding unit/AI decoding unit.

The AI encoding unit is configured to encode input data (for example, a picture or a video) according to the encoding method provided in embodiments of this application.

The storage/transmission unit is configured to store (for a terminal, video surveillance, a public cloud, a private cloud, or the like) or transmit (for a public cloud, a private cloud, a live streaming technology, or the like) the encoded input data.

The AI decoding unit is configured to decode the encoded input data according to the decoding method provided in embodiments of this application, to obtain reconstructed data (which may also be understood as data obtained by reconstructing an encoded feature of the input data).

There are a plurality of cases for the foregoing example application scenario, and the following provides detailed descriptions.

A first case is a storage application scenario.

The storage application scenario includes: a terminal album, video surveillance, or the like. FIG. 1b is a diagram of the scenario. The scenario includes an AI encoding unit, a file saving unit, a file loading unit, and an AI decoding unit.

The AI encoding unit is configured to encode input data (for example, a picture or a video) according to the encoding method provided in embodiments of this application, to obtain a binary file.

The file saving unit is configured to save the binary file output by the AI encoding unit.

The file loading unit is configured to load the binary file.

The AI decoding unit is configured to decode the loaded binary file according to the decoding method provided in embodiments of this application, to obtain reconstructed data (which may also be understood as data obtained by reconstructing an encoded feature of the input data).

A second case is a terminal-cloud interaction scenario.

The terminal-cloud interaction scenario includes: a live streaming scenario, a public cloud, or the like. FIG. 1c is a diagram of the scenario. The scenario includes an encoding unit, a decoding unit, an AI encoding unit, an AI decoding unit, an encoding unit, and a decoding unit.

A terminal side includes the encoding unit and the decoding unit, and a cloud side includes the decoding unit, the encoding unit, the AI encoding unit, and the AI decoding unit.

The terminal obtains input data, and encodes the input data by using the encoding unit to obtain an encoded feature. The terminal sends the encoded feature to the cloud. After receiving the encoded feature, the cloud decodes the encoded feature by using the decoding unit, to obtain reconstructed data. Then, the reconstructed data is encoded by using the AI encoding unit according to the encoding method provided in embodiments of this application, to obtain a bitstream/file. The cloud decodes the bitstream/file by using the AI decoding unit according to the decoding method provided in embodiments of this application, to obtain reconstructed data. The cloud encodes the reconstructed data by using the encoding unit to obtain an encoded feature, and sends the encoded feature to the terminal. After receiving the encoded feature, the terminal decodes the encoded feature by using the decoding unit to obtain the reconstructed data.

It may be understood that, in FIG. 1c, encoding methods used by the encoding unit and the AI encoding unit may be inconsistent (or it is understood that operations of the decoding unit and the AI encoding unit in the cloud may be referred to as transcoding operations, and operations of the AI decoding unit and the encoding unit in the cloud may be referred to as transcoding operations). For example, the cloud usually has more abundant computing power resources than the terminal. Therefore, an algorithm (AI encoding) that has a high computing power requirement and higher compression efficiency may be used to compress (transcode) the input data again, to achieve a higher compression ratio and save storage space of the cloud. A transcoding process is as follows: Decoding is first performed, and then encoding is performed in another manner.

It may be understood that the foregoing several scenarios are merely examples. In actual application, there may be another scenario. This is not specifically limited herein.

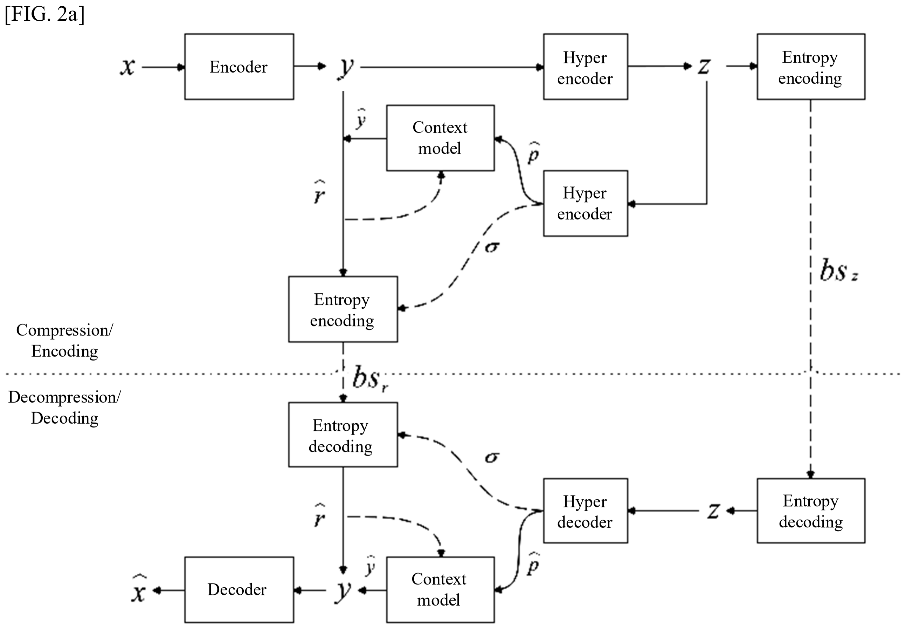

With reference to FIG. 2a, the following describes an AI encoding unit and an AI decoding unit provided in embodiments of this application. The architecture may be used in the AI encoding unit/AI decoding unit shown in FIG. 1a to FIG. 1c, to complete encoding/decoding processing.

FIG. 2a is a diagram of an AI encoding unit and an AI decoding unit according to an embodiment of this application. A basic architecture of an AI compression model is a two-layer encoder-decoder architecture. Input data is complex data such as a picture or a video, and an encoder and a hyper encoder output a latent variable and a hyper latent variable, and perform entropy encoding on the latent variable and the hyper latent variable. In a decoding process, the hyper latent variable is first decoded, then the latent variable is predicted by using a hyper decoder (including a hyper decoding prediction model and a hyper-scale decoding model) and restored based on an entropy decoding result and a context model, and finally the original data is restored by using a decoder.

It is assumed that the input data is x, the latent variable is y, and the hyper latent variable is z. The entire encoding process is represented by the following formulas:

$y = Enc(x)$

$z = HEnc(x)$, $bs_z = EntropyEncoding(z)$

$$\hat{p} = HDec(z), \hat{y} = Context(\hat{p}, y), \hat{r} = \hat{y} - y$$

σ = HSDec(x), $bs_r$ = *EntropyEncoding($\hat{r}$, σ)*

Herein, Enc, HEnc respectively represent the encoder and the hyper encoder, the hyper decoding prediction model HDec and the hyper-scale decoding model HSDec form the hyper decoder, EntropyEncoding is an entropy encoding operation, Context is the context model, σ is a scale variable, and $\hat{p}$ is an output of the hyper decoding prediction model, may be referred to as a prior feature, is used as an input of the context model, and is used to predict a latent variable $\hat{y}$. Bitstreams $bs_z$, $bs_r$ are output.

Decoding is performed based on $bs_z$, $bs_r$ in a decoding process, which is expressed by using the following formulas:

z = EntropyDecoding($bs_z$) σ = HSDec(z), $\hat{r}$ = *EntropyDecoding($bs_r$, σ)*

$$\hat{p} = HDec(z), \hat{y} = Context(\hat{p}, \hat{r}), y = \hat{y} + \hat{r}$$

$\hat{x}$ = *Dec(y)*

Herein, EntropyDecoding is an entropy decoding operation, and Dec is the decoder. An input of Context herein and an input of Context on the encoder side are different, but have equivalent operations. A principle thereof is described in detail below.

It should be noted that in a picture compression model, x, y, z, $\hat{p}$, $\hat{r}$, y are all 3-dimensional tensors, and have a same shape.

A core of the context model is to predict a high-dimensional latent variable $\hat{y}$ in a plurality of steps. Only a part of dimensions of $\hat{y}$ are predicted each time, and a current part of dimensions of $\hat{y}$ are predicted by fully using predicted $\hat{y}$ and y (or $\hat{r}$) in a corresponding dimension. Because prediction is performed step by step and predicted information is fully used, the context model predicts y more accurately. In this way, a quantity of encoding bits required for entropy-encoding a residual $\hat{r} = \hat{y}$ - y is smaller, and better encoding performance can be achieved.

The core of the context model is to divide prediction of $\hat{y}$ into several parts $\hat{y}_1, \hat{y}_2, \ldots, \hat{y}_K$ (the same division manner is correspondingly used for $\hat{r}, y, \hat{p}$). For each part $\hat{y}_i$, the context model is expressed as the following formula:

$$\hat{y}_i = \text{Context}_i(\hat{p}_i, \hat{r}_{<i} + \hat{y}_{<i})$$

Herein, $\hat{r}_{<i}$ is $[\hat{r}_1, \ldots, \hat{r}_{i-1}]$, and $\hat{y}_{<i}$ is $[\hat{y}_1, \ldots, \hat{y}_{i-1}]$. A Context procedure of the encoding process may be specifically written in the following form:

$$\hat{y}_i = \text{Context}_i(y_{<i}, \hat{p}_i), \hat{r}_i = \hat{y}_i - y_i$$

Herein, $y_{<i}$ is $[y_1, \ldots, y_{i-1}]$.

This application focuses on an implementation solution of how to appropriately divide $\hat{y}$ ($\hat{r}, y, \hat{p}$) in the picture compression field.

The following describes a hardware structure of a chip according to an embodiment of this application.

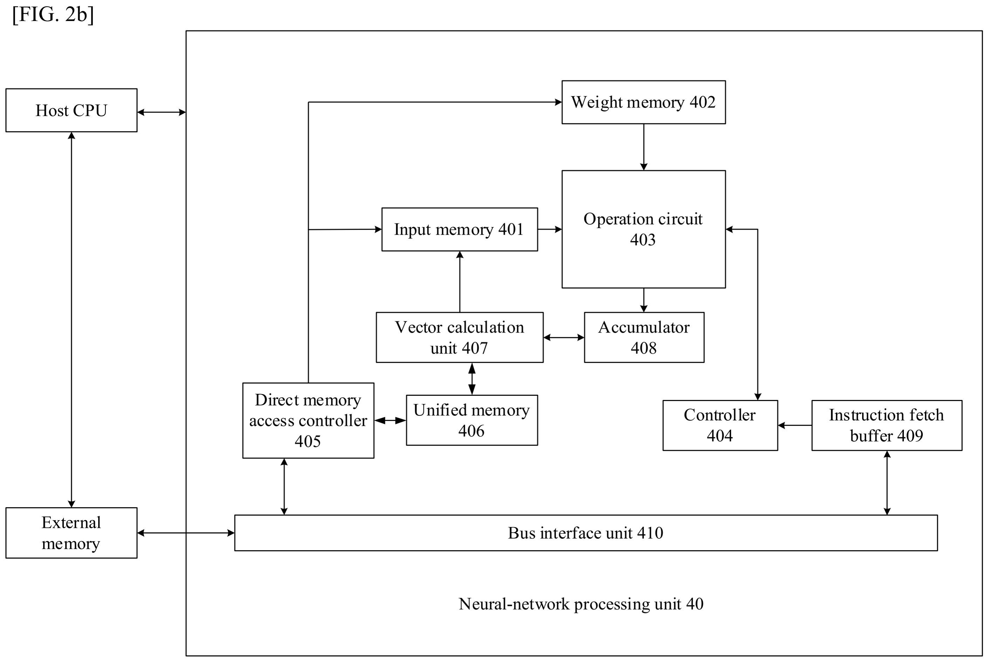

FIG. 2b shows a hardware structure of a chip according to an embodiment of the present invention. The chip includes a neural-network processing unit 40. The chip may be disposed in the AI encoding unit/AI decoding unit shown in FIG. 1a to FIG. 1c, to complete encoding/decoding processing.

The neural-network processing unit 40 may be any processor suitable for large-scale exclusive OR operation processing, for example, a neural-network processing unit (neural-network processing unit, NPU), a tensor processing unit (tensor processing unit, TPU), or a graphics processing unit (graphics processing unit, GPU). The NPU is used as an example. The neural-network processing unit 40 serves as a coprocessor, and is mounted onto a host central processing unit (central processing unit, CPU) (host CPU). The host CPU assigns a task. A core part of the NPU is an operation circuit 403, and a controller 404 controls the operation circuit 403 to extract data in a memory (a weight memory or an input memory) and perform an operation.

In some implementations, the operation circuit 403 internally includes a plurality of processing units (process engine, PE). In some implementations, the operation circuit 403 is a two-dimensional systolic array. The operation circuit 403 may alternatively be a one-dimensional systolic array or another electronic circuit that can perform mathematical operations such as multiplication and addition. In some implementations, the operation circuit 403 is a general-purpose matrix processor.

For example, it is assumed that there is an input matrix A, a weight matrix B, and an output matrix C. The operation circuit 403 fetches data corresponding to the matrix B from a weight memory 402, and buffers the data on each PE in the operation circuit. The operation circuit fetches data of the matrix A from an input memory 401, performs a matrix operation on the data of the matrix A and the matrix B, to obtain a partial result or a final result of the matrix, and stores the result in an accumulator 408.

A vector calculation unit 407 may perform further processing on an output of the operation circuit, such as vector multiplication, vector addition, an exponential operation, a logarithmic operation, and size comparison. For example, the vector calculation unit 407 may be configured to perform network computing, such as pooling (Pooling), batch normalization (Batch Normalization), or local response normalization (Local Response Normalization), at a non-convolutional/non-FC layer in a neural network.

In some implementations, the vector calculation unit 407 stores a processed output vector in the unified memory 406. For example, the vector calculation unit 407 may apply a non-linear function to the output of the operation circuit 403, for example, to a vector of an accumulated value, so as to generate an activation value. In some implementations, the vector calculation unit 407 generates a normalized value, a combined value, or both. In some implementations, the processed output vector can be used as an activation input of the operation circuit 403, for example, used at a subsequent layer in the neural network.

The unified memory 406 is configured to store input data and output data.

For weight data, a direct memory access controller (direct memory access controller, DMAC) 405 directly transfers input data in an external memory to the input memory 401 and/or the unified memory 406, stores weight data in the external memory into the weight memory 402, and stores data in the unified memory 406 into the external memory.

A bus interface unit (bus interface unit, BIU) 410 is configured to implement interaction between the host CPU, the DMAC, and an instruction fetch buffer 409 through a bus.

The instruction fetch buffer (instruction fetch buffer) 409 connected to the controller 404 is configured to store instructions used by the controller 404.

The controller 404 is configured to invoke the instructions buffered in the instruction fetch buffer 409, to control a working process of the operation accelerator.

Generally, the unified memory 406, the input memory 401, the weight memory 402, and the instruction fetch buffer 409 each are an on-chip (On-Chip) memory. The external memory is a memory outside the NPU. The external memory may be a double data rate synchronous dynamic random access memory (double data rate synchronous dynamic random access memory, DDR SDRAM for short), a high bandwidth memory (high bandwidth memory, HBM), or another readable and writable memory.

A method provided in embodiments of this application is described below. The method may be performed by an encoding device or a decoding device, or may be performed by a component (for example, a processor, a chip, or a chip system) of the encoding device or the decoding device. The encoding device or the decoding device may be a cloud device, or may be a terminal device. Certainly, the method may be alternatively performed by a system including a cloud device and a terminal device. Optionally, the method may be processed by processors such as a CPU, an NPU, and a GPU in the encoding device or the decoding device. This is not limited in this application.

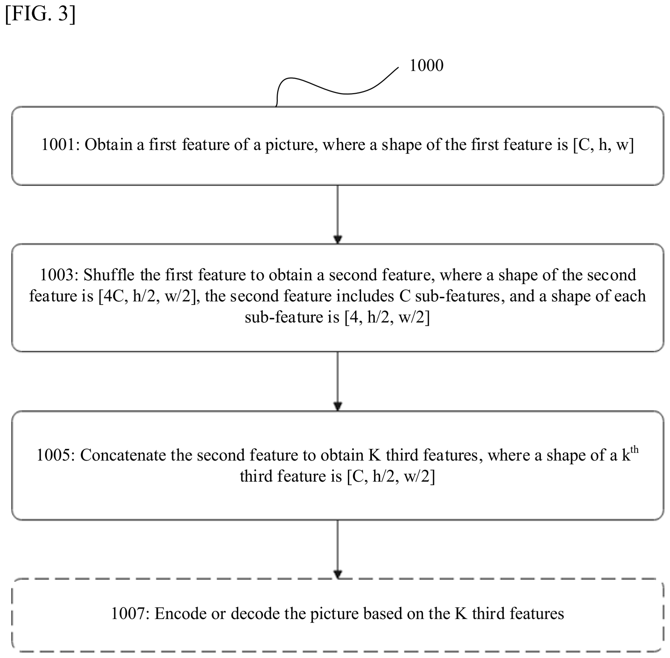

FIG. 3 is a diagram of an encoding or decoding method 1000 according to an embodiment of this application. The method includes the following steps.

1001: Obtain a first feature of a picture, where a shape (shape) of the first feature is [C, h, w].

1003: Shuffle (down-shuffle) the first feature to obtain a second feature, where a shape of the second feature is [4C, h/2, w/2], the second feature includes C sub-features, and a shape of each sub-feature is [4, h/2, w/2].

1005: Concatenate (cross-cat) the second feature to obtain K third features, where a shape of a $k^{th}$ third feature is [C, h/2, w/2].

1007: Encode or decode the picture based on the K third features.

In some possible implementations, step 1007 is an optional step.

In step 1001, the first feature of the picture is obtained, where the shape of the first feature is [C, h, w], C represents a quantity of channels of the first feature, h represents a length of the first feature, w represents a width of the first feature, C, h, and w are all positive integer multiples of 2, each channel of the first feature includes $(h/2)\times(w/2)$ $2\times2$ pixel blocks, that is, there are pixel blocks of (h/2) rows and (w/2) columns, and each pixel block includes four pixels: an upper left pixel, a lower right pixel, an upper right pixel, and a lower left pixel.

In this application, a pixel block may also be referred to as a feature block, and a pixel may also be referred to as a feature point.

In a possible implementation, as shown in FIG. 4a to FIG. 4f, an upper left pixel, a lower right pixel, an upper right pixel, and a lower left pixel of each $2\times2$ pixel block in a $c^{th}$ channel of the first feature are respectively represented by 0, 1, 2, and 3, or 4, 5, 6, and 7, where c is a positive integer and $1\leq c\leq C$. In other words, an upper left pixel of each pixel block in the same channel is represented by 0 or 4, a lower right pixel of each pixel block in the same channel is represented by 1 or 5, an upper right pixel of each pixel block in the same channel is represented by 2 or 5, and a lower left pixel of each pixel block in the same channel is represented by 4 or 7.

In a possible implementation, on an encoder side, an encoder encodes the picture to obtain a latent variable, a hyper encoder encodes the latent variable into a hyper latent variable, and a hyper decoder restores the hyper latent variable to a prior feature (that is, the first feature) and a scale variable.

In a possible implementation, on a decoder side, entropy decoding is performed on a bitstream including encoded hyper latent variable data to obtain a hyper latent variable, and then a hyper decoder restores the hyper latent variable to a prior feature (that is, the first feature) and a scale variable.

In step 1003, the first feature is shuffled to obtain the second feature, where the second feature includes the C sub-features, and the shape of each sub-feature is [4, h/2, w/2]. In a possible implementation, a $c^{th}$ sub-feature of the second feature corresponds to the $c^{th}$ channel of the first feature, c is a positive integer, $1 \leq c \leq C$, and four channels of the $c^{th}$ sub-feature respectively include upper left pixels, lower right pixels, upper right pixels, and lower left pixels in all pixel blocks of the $c^{th}$ channel of the first feature.

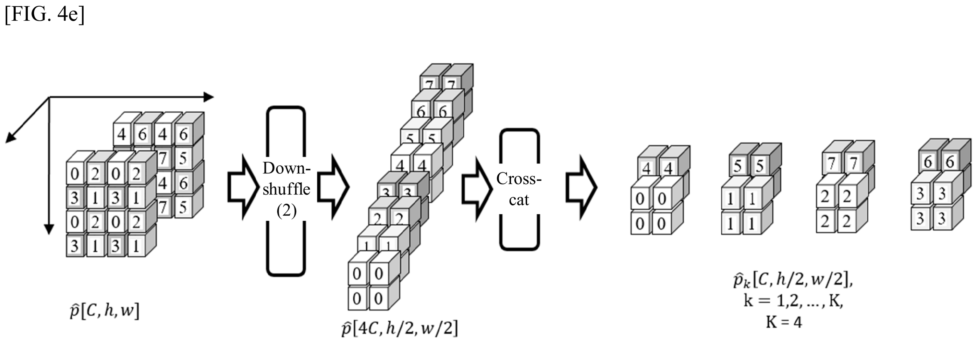

In the examples shown in FIG. 4a to FIG. 4c, and FIG. 4e, the quantity C of channels of the first feature is 2, the height h is 4, and the width w is 4. The second feature is obtained by shuffling the first feature. The second feature includes two sub-features, and a shape of each sub-feature is [4, 2, 2]. A $1^{st}$ sub-feature of the second feature includes a $1^{st}$ channel to a $4^{th}$ channel of the second feature, four channels of the $1^{st}$ sub-feature respectively include upper left pixels (0), lower right pixels (1), upper right pixels (2), and lower left pixels (3) in all pixel blocks of a $1^{st}$ channel of the first feature, and all the channels of the $1^{st}$ sub-feature of the second feature jointly include all pixels of the $1^{st}$ channel of the first feature. A $2^{nd}$ sub-feature of the second feature includes a $5^{th}$ channel to an $8^{th}$ channel of the second feature, four channels of the $2^{nd}$ sub-feature respectively include upper left pixels (4), lower right pixels (5), upper right pixels (6), and lower left pixels (7) in all pixel blocks of a $2^{nd}$ channel of the first feature, and all the channels of the $2^{nd}$ sub-feature of the second feature jointly include all pixels of the $2^{nd}$ channel of the first feature.

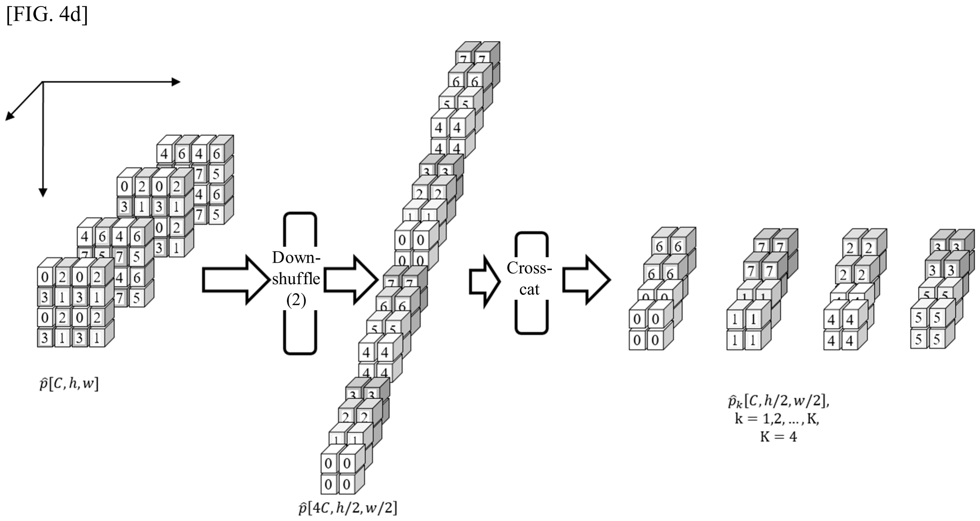

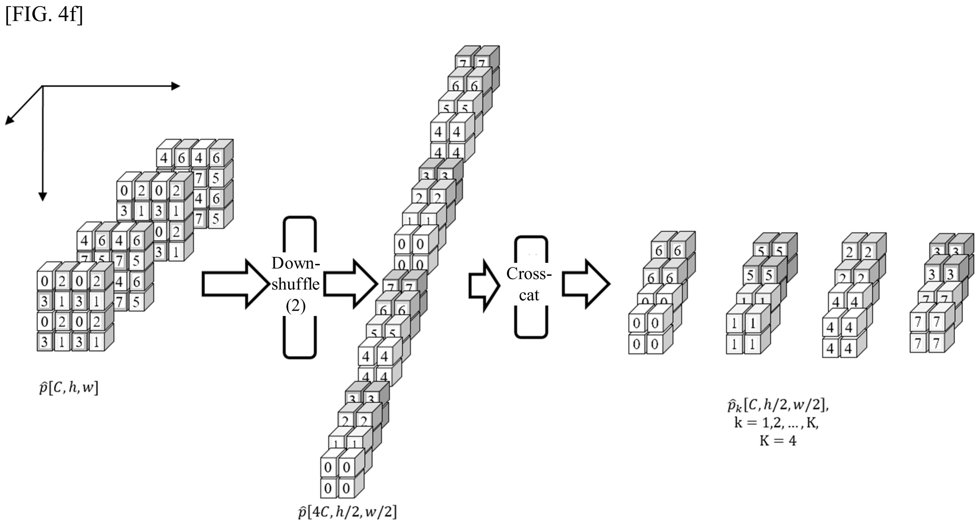

In the examples shown in FIG. 4d and FIG. 4f, the quantity C of channels of the first feature is 4, the height h is 4, and the width w is 4. The second feature is obtained by shuffling the first feature. The second feature includes four sub-features, and a shape of each sub-feature is [4, 2, 2]. A $1^{st}$ sub-feature of the second feature includes a $1^{st}$ channel to a $4^{th}$ channel of the second feature, four channels of the $1^{st}$ sub-feature respectively include upper left pixels (0), lower right pixels (1), upper right pixels (2), and lower left pixels (3) in all pixel blocks of a $1^{st}$ channel of the first feature, and all the channels of the $1^{st}$ sub-feature of the second feature jointly include all pixels of the $1^{st}$ channel of the first feature. A $2^{nd}$ sub-feature of the second feature includes a $5^{th}$ channel to an $8^{th}$ channel of the second feature, four channels of the $2^{nd}$ sub-feature respectively include upper left pixels (4), lower right pixels (5), upper right pixels (6), and lower left pixels (7) in all pixel blocks of a $2^{nd}$ channel of the first feature, and all the channels of the $2^{nd}$ sub-feature of the second feature jointly include all pixels of the $2^{nd}$ channel of the first feature. A $3^{rd}$ sub-feature of the second feature includes a $9^{th}$ channel to a $12^{th}$ channel of the second feature, four channels of the $3^{rd}$ sub-feature respectively include upper left pixels (0), lower right pixels (1), upper right pixels (2), and lower left pixels (3) in all pixel blocks of a $3^{rd}$ channel of the first feature, and all the channels of the $3^{rd}$ sub-feature of the second feature jointly include all pixels of the $3^{rd}$ channel of the first feature. A $4^{th}$ sub-feature of the second feature includes a $13^{th}$ channel to a $16^{th}$ channel of the second feature, four channels of the $4^{th}$ sub-feature respectively include upper left pixels (4), lower right pixels (5), upper right pixels (6), and lower left pixels (7) in all pixel blocks of a $4^{th}$ channel of the first feature, and all the channels of the $4^{th}$ sub-feature of the second feature jointly include all pixels of the $4^{th}$ channel of the first feature.

It should be noted that FIG. 4a to FIG. 4f provide only several specific examples of the solution provided in this application. In this application, a value of C is not limited to 2 or 4, and values of h and w are not limited to 4, provided that C, h, and w are all positive integers and are integer multiples of 2. A channel arrangement of each of the K third features is not limited in this application, provided that N pixels at a same location in N channels of the $k^{th}$ third feature have different locations in N channels of the first feature, where N is a positive integer and $2 \leq N \leq C$. A value of K is not limited to 3 or 4 in this application, provided that K is a positive integer greater than 2.

In step 1005, the second feature is concatenated to obtain the K third features, where the shape of the $k^{th}$ third feature is [C, h/2, w/2], the $k^{th}$ third feature includes one channel of each sub-feature of the second feature, K is a positive integer greater than 2, k is a positive integer, and $1 \leq k \leq K$.

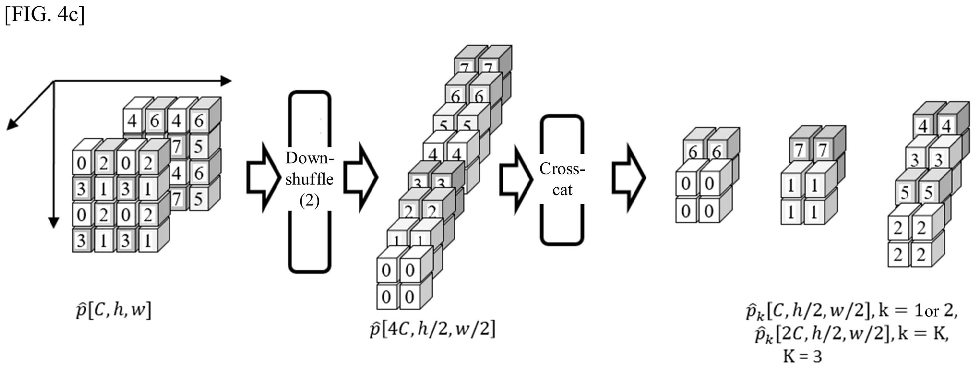

In the examples shown in FIG. 4a, FIG. 4b, and FIG. 4d to FIG. 4f, shapes of all of the K third features are the same, and are all [C, h/2, w/2]. Specifically, in the examples shown in FIG. 4a, FIG. 4b, and FIG. 4e, a shape of each third feature is [2, 2, 2]. In the examples shown in FIG. 4d and FIG. 4f, a shape of each third feature is [4, 2, 2]. However, this application sets no limitation that the shapes of all of the K third features need to be the same. For example, in the example shown in FIG. 4c, shapes of the $1^{st}$ and $2^{nd}$ third features are the same, and are both [2, 2, 2], and a shape of the last third feature is different from the shapes of the $1^{st}$ and $2^{nd}$ third features, and is [4, 2, 2]. In the method provided in this application, quantities of channels of all of the K third features may be the same or may be different, but a sum of the quantities of channels of all of the K third features is required to be four times C.

In a possible implementation of step 1005, the third feature obtained through concatenation meets the following condition: N pixels at a same location in N channels of the $k^{th}$ third feature have different locations in N channels of the first feature, where N is a positive integer and $2 \leq N \leq C$. A location of a pixel may be represented by using spatial coordinates [x, y], x represents a horizontal coordinate offset of the pixel relative to an upper left corner of the picture, and y represents a vertical coordinate offset of the pixel relative to the upper left corner of the picture. Alternatively, a location of a pixel may be indicated by using a representation symbol of the pixel. For example, in the examples shown in FIG. 4a to FIG. 4d, an upper left pixel, a lower right pixel, an upper right pixel, and a lower left pixel of each $2 \times 2$ pixel block in the $c^{th}$ channel of the first feature are respectively represented by 0, 1, 2, and 3, or 4, 5, 6, and 7, where c is a positive integer and $1 \leq c \leq C$. In other words, an upper left pixel of each pixel block in the same channel is represented by 0 or 4, a lower right pixel of each pixel block in the same channel is represented by 1 or 5, an upper right pixel of each pixel block in the same channel is represented by 2 or 5, and a lower left pixel of each pixel block in the same channel is represented by 4 or 7. The N pixels at the same location in the N channels of the $k^{th}$ third feature having different locations in the N channels of the first feature means that the following cases are excluded for pixels included in the N channels: (1) all the pixels are upper left pixels of $2 \times 2$ pixel blocks in the first feature; (2) all the pixels are lower right pixels of $2 \times 2$ pixel blocks in the first feature; (3) all the pixels are upper right pixels of $2 \times 2$ pixel blocks in the first feature; and (4) all the pixels are lower left pixels of $2 \times 2$ pixel blocks in the first feature. It should be noted that, this application sets only a limitation that at least one of all the K third features meets the foregoing condition, and it is not required that all the K third features meet the foregoing condition. For example, in the examples provided in FIG. 4a to FIG. 4d, all the K third features meet the foregoing condition. However, in the example provided in FIG. 4e, only the last two third features meet the foregoing condition. In the example provided in FIG. 4f, only the $1^{st}$ third feature and the $3^{rd}$ third feature meet the foregoing condition.

When K=4, the $k^{th}$ third feature includes an $(8c + d_{1k} + 1, 8c + d_{2k} + 1, c = 0, ..., C/2 - 1)^{th}$ channel of the second feature.

There are a plurality of concatenation manners for $d_{1k}, d_{2k}$ (as shown in Table 1 below), provided that the concatenation manner is not $(0, 4) \rightarrow (1, 5) \rightarrow (2, 6) \rightarrow (3, 7)$.

Table 1: Possible concatenation manners for the third feature when K=4

| Concatenation number | $(d_{10}, d_{20})$ | $(d_{11}, d_{21})$ | $(d_{12}, d_{22})$ | $(d_{13}, d_{23})$ |
|---|---|---|---|---|
| 1 | (0, 6) | (1, 7) | (2, 4) | (3, 5) |
| 2 | (0, 6) | (1, 7) | (2, 5) | (3, 4) |
| 3 | (0, 6) | (1, 4) | (2, 5) | (3, 7) |
| 4 | (0, 6) | (1, 4) | (2, 7) | (3, 5) |
| 5 | (0,7) | (1, 6) | (2, 5) | (3, 4) |
| 6 | (0,7) | (1, 6) | (2, 4) | (3, 5) |
| 7 | (0,7) | (1, 4) | (2, 5) | (3, 6) |
| 8 | (0, 5) | (1, 7) | (2, 4) | (3, 6) |
| 9 | (0, 5) | (1, 6) | (2, 7) | (3, 4) |
| 10 | (0, 5) | (1, 6) | (2, 4) | (3, 7) |
| 11 | (0, 5) | (1, 4) | (2, 7) | (3, 6) |
| 12 | (0, 4) | (1,5) | (2, 7) | (3, 6) |
| 13 | (0, 6) | (1,5) | (2, 4) | (3, 7) |
| 14 | (0, 5) | (1, 6) | (2, 4) | (3, 7) |
| ... | ... | ... | ... | ... |

In the example shown in FIG. 4a, the concatenation manner 1, that is, $(0, 6) \rightarrow (1, 7) \rightarrow (2, 4) \rightarrow (3, 5)$, in Table 1 is used.

In the example shown in FIG. 4b, the concatenation manner 5, that is, $(0, 7) \rightarrow (1, 6) \rightarrow (2, 5) \rightarrow (3, 4)$, in Table 1 is used.

It should be noted that, this application does not list all concatenation manners, and this application sets only a limitation that the concatenation manner is not $(0, 4) \rightarrow (1, 5) \rightarrow (2, 6) \rightarrow (3, 7)$. In other words, a case in which each third feature is concatenated in a manner of pixels at a same location in pixel blocks of the first feature is excluded.

FIG. 4a and FIG. 4b show examples in which C=2. When C=4, in the example shown in FIG. 4d, concatenation for $d_{1k}, d_{2k}$ is still in the concatenation manner 1 in Table 1, that is, $(0, 6) \rightarrow (1, 7)$-(2, 4)-(3, 5). In this case, a quantity of channels of each obtained third feature changes to 4, a 1st third feature includes $1^{st}, 7^{th}, 9^{th}$, and $15^{th}$ channels of the second feature, a $2^{nd}$ third feature includes $2^{nd}, 8^{th}, 10^{th}$, and $16^{th}$ channels of the second feature, a $3^{rd}$ third feature includes $3^{rd}, 5^{th}, 11^{th}$, and $13^{th}$ channels of the second feature, and a $4^{th}$ third feature includes $4^{th}, 6^{th}, 12^{th}$, and $14^{th}$ channels of the second feature.

It should be noted that, in this application, channel numbers progressively increase from 1. In some implementations, the channel numbers may alternatively progressively increase from 0. When the channel numbers progressively increase from 0, 1 needs to be subtracted from all the channel numbers mentioned in this application.

In a possible implementation of step 1005, C/2 channels of the $k^{th}$ third feature include an $i^{th}$ channel of each sub-feature in a first portion of sub-features of the second feature, remaining C/2 channels of the $k^{th}$ third feature include a $j^{th}$ channel of each sub-feature in a second portion of sub-features of the second feature, i and j are positive integers, $1 \leq i \leq 4$, $1 \leq j \leq 4$, $i \neq j$, the first portion of sub-features and the second portion of sub-features each include C/2 sub-features of the second feature, and the first portion of sub-features and the second portion of sub-features jointly form the second feature. When K=4 and C=2, possible concatenations in this implementation are listed in Table 1. A $1^{st}$ channel, a $2^{nd}$ channel, a $3^{rd}$ channel, and a $4^{th}$ channel of any sub-feature of the second feature sequentially include upper left pixels, lower right pixels, upper right pixels, and lower left pixels of all $2 \times 2$ pixel blocks in a same channel of the first feature. Therefore, through a limitation of $i \neq j$, it can be ensured that the C/2 channels and the remaining C/2 channels of the $k^{th}$ third feature include pixels at different locations in pixel blocks in the first feature, so as to ensure that in a division manner, same-channel adjacent pixel information and pixel information at a same location in a surrounding channel can be fully used when a context model predicts a latent variable, so that the latent variable predicted by the context model is more accurate, a quantity of bits required for transmitting a residual of the latent variable is reduced, and a bit rate is reduced. It should be noted that, this application sets only a limitation that at least one of all the K third features meets the foregoing condition, and it is not required that all the K third features meet the foregoing condition. For example, in the examples provided in FIG. 4a to FIG. 4d, all the K third features meet the foregoing condition. However, in the example provided in FIG. 4e, only the last two third features meet the foregoing condition. In the example provided in FIG. 4f, only the $1^{st}$ third feature and the $3^{rd}$ third feature meet the foregoing condition.

In a possible embodiment of the foregoing implementation, when K=4, C/2 channels of a $1^{st}$ third feature include a $1^{st}$ channel of each sub-feature in the first portion of sub-features, and remaining C/2 channels of the $1^{st}$ third feature include a $3^{rd}$ channel of each sub-feature in the second portion of sub-features; C/2 channels of a $2^{nd}$ third feature include a $2^{nd}$ channel of each sub-feature in the first portion of sub-features, and remaining C/2 channels of the $2^{nd}$ third feature include a $4^{th}$ channel of each sub-feature in the second portion of sub-features; C/2 channels of a $3^{rd}$ third feature include a $3^{rd}$ channel of each sub-feature in the first portion of sub-features, and remaining C/2 channels of the $3^{rd}$ third feature include a $1^{st}$ channel of each sub-feature in the second portion of sub-features; and C/2 channels of a $4^{th}$ third feature include a $4^{th}$ channel of each sub-feature in the first portion of sub-features, and remaining C/2 channels of the $4^{th}$ third feature include a $2^{nd}$ channel of each sub-feature in the second portion of sub-features. If C=2, it indicates the example shown in FIG. 4a. To be specific, the $1^{st}$ third feature includes a $1^{st}$ channel of a $1^{st}$ sub-feature of the second feature and a $3^{rd}$ channel of a $2^{nd}$ sub-feature of the second feature; the $2^{nd}$ third feature includes a $2^{nd}$ channel of the $1^{st}$ sub-feature of the second feature and a $4^{th}$ channel of the $2^{nd}$ sub-feature of the second feature; the $3^{rd}$ third feature includes a $3^{rd}$ channel of the $1^{st}$ sub-feature of the second feature and a $1^{st}$ channel of the $2^{nd}$ sub-feature of the second feature; and the $4^{th}$ third feature includes a $4^{th}$ channel of the $1^{st}$ sub-feature of the second feature and a $2^{nd}$ channel of the $2^{nd}$ sub-feature of the second feature.

In a possible embodiment of the foregoing implementation, when K=4, C/2 channels of a $1^{st}$ third feature include a $1^{st}$ channel of each sub-feature in the first portion of sub-features, and remaining C/2 channels of the $1^{st}$ third feature include a $4^{th}$ channel of each sub-feature in the second portion of sub-features; C/2 channels of a $2^{nd}$ third feature include a $2^{nd}$ channel of each sub-feature in the first portion of sub-features, and remaining C/2 channels of the $2^{nd}$ third feature include a $3^{rd}$ channel of each sub-feature in the second portion of sub-features; C/2 channels of a $3^{rd}$ third feature include a $3^{rd}$ channel of each sub-feature in the first portion of sub-features, and remaining C/2 channels of the $3^{rd}$ third feature include a $2^{nd}$ channel of each sub-feature in the second portion of sub-features; and C/2 channels of a $4^{th}$ third feature include a $4^{th}$ channel of each sub-feature in the first portion of sub-features, and remaining C/2 channels of the $4^{th}$ third feature include a $1^{st}$ channel of each sub-feature in the second portion of sub-features. If C=2, it indicates the example shown in FIG. 4b. To be specific, the $1^{st}$ third feature includes a $1^{st}$ channel of a $1^{st}$ sub-feature of the second feature and a $4^{th}$ channel of a $2^{nd}$ sub-feature of the second feature; the $2^{nd}$ third feature includes a $2^{nd}$ channel of the $1^{st}$ sub-feature of the second feature and a $3^{rd}$ channel of the $2^{nd}$ sub-feature of the second feature; the $3^{rd}$ third feature includes a $3^{rd}$ channel of the $1^{st}$ sub-feature of the second feature and a $2^{nd}$ channel of the $2^{nd}$ sub-feature of the second feature; and the $4^{th}$ third feature includes a $4^{th}$ channel of the $1^{st}$ sub-feature of the second feature and a $1^{st}$ channel of the $2^{nd}$ sub-feature of the second feature.

In a possible embodiment of the foregoing implementation, when K=4, C/2 channels of a $1^{st}$ third feature include a $1^{st}$ channel of each sub-feature in the first portion of sub-features, and remaining C/2 channels of the $1^{st}$ third feature include a $3^{rd}$ channel of each sub-feature in the second portion of sub-features; C/2 channels of a $2^{nd}$ third feature include a $2^{nd}$ channel of each sub-feature in the first portion of sub-features, and remaining C/2 channels of the $2^{nd}$ third feature include a $4^{th}$ channel of each sub-feature in the second portion of sub-features; C/2 channels of a $3^{rd}$ third feature include a $3^{rd}$ channel of each sub-feature in the first portion of sub-features, and remaining C/2 channels of the $3^{rd}$ third feature include a $2^{nd}$ channel of each sub-feature in the second portion of sub-features; and C/2 channels of a $4^{th}$ third feature include a $4^{th}$ channel of each sub-feature in the first portion of sub-features, and remaining C/2 channels of the $4^{th}$ third feature include a $1^{st}$ channel of each sub-feature in the second portion of sub-features.

In a possible embodiment of the foregoing implementation, when K=4, C/2 channels of a $1^{st}$ third feature include a $1^{st}$ channel of each sub-feature in the first portion of sub-features, and remaining C/2 channels of the $1^{st}$ third feature include a $4^{th}$ channel of each sub-feature in the second portion of sub-features; C/2 channels of a $2^{nd}$ third feature include a $2^{nd}$ channel of each sub-feature in the first portion of sub-features, and remaining C/2 channels of the $2^{nd}$ third feature include a $3^{rd}$ channel of each sub-feature in the second portion of sub-features; C/2 channels of a $3^{rd}$ third feature include a $3^{rd}$ channel of each sub-feature in the first portion of sub-features, and remaining C/2 channels of the $3^{rd}$ third feature include a $1^{st}$ channel of each sub-feature in the second portion of sub-features; and C/2 channels of a $4^{th}$ third feature include a $4^{th}$ channel of each sub-feature in the first portion of sub-features, and remaining C/2 channels of the $4^{th}$ third feature include a $2^{nd}$ channel of each sub-feature in the second portion of sub-features.

In a possible embodiment of the foregoing implementation, when K=3, shapes of a $1^{st}$ third feature and a $2^{nd}$ third feature are [C, h/2, w/2], and a shape of a $3^{rd}$ third feature is [2C, h/2, w/2]; C/2 channels of the $1^{st}$ third feature include a $1^{st}$ channel of each sub-feature in the first portion of sub-features, and remaining C/2 channels of the $1^{st}$ third feature include a $4^{th}$ channel of each sub-feature in the second portion of sub-features; C/2 channels of the $2^{nd}$ third feature include a $2^{nd}$ channel of each sub-feature in the first portion of sub-features, and remaining C/2 channels of the $2^{nd}$ third feature include a $3^{rd}$ channel of each sub-feature in the second portion of sub-features; and C channels of the $3^{rd}$ third feature include a $3^{rd}$ channel and a $4^{th}$ channel of each sub-feature in the first portion of sub-features, and remaining C channels of the $3^{rd}$ third feature include a $1^{st}$ channel and a $2^{nd}$ channel of each sub-feature in the second portion of sub-features.

In a possible embodiment of the foregoing implementation, when K=3, shapes of a $1^{st}$ third feature and a $3^{rd}$ third feature are [C, h/2, w/2], and a shape of a $2^{nd}$ third feature is [2C, h/2, w/2]; C/2 channels of the $1^{st}$ third feature include a $1^{st}$ channel of each sub-feature in the first portion of sub-features, and remaining C/2 channels of the $1^{st}$ third feature include a $4^{th}$ channel of each sub-feature in the second portion of sub-features; C/2 channels of the $3^{rd}$ third feature include a $2^{nd}$ channel of each sub-feature in the first portion of sub-features, and remaining C/2 channels of the $3^{rd}$ third feature include a $3^{rd}$ channel of each sub-feature in the second portion of sub-features; and C channels of the $2^{nd}$ third feature include a $3^{rd}$ channel and a $4^{th}$ channel of each sub-feature in the first portion of sub-features, and remaining C channels of the $2^{nd}$ third feature include a $1^{st}$ channel and a $2^{nd}$ channel of each sub-feature in the second portion of sub-features.

In a possible embodiment of the foregoing implementation, when K=3, shapes of a $2^{nd}$ third feature and a $3^{rd}$ third feature are [C, h/2, w/2], and a shape of a $1^{st}$ third feature is [2C, h/2, w/2]; C/2 channels of the $2^{nd}$ third feature include a $1^{st}$ channel of each sub-feature in the first portion of sub-features, and remaining C/2 channels of the $2^{nd}$ third feature include a $4^{th}$ channel of each sub-feature in the second portion of sub-features; C/2 channels of the $3^{rd}$ third feature include a $2^{nd}$ channel of each sub-feature in the first portion of sub-features, and remaining C/2 channels of the $3^{rd}$ third feature include a $3^{rd}$ channel of each sub-feature in the second portion of sub-features; and C channels of the $1^{st}$ third feature include a $3^{rd}$ channel and a $4^{th}$ channel of each sub-feature in the first portion of sub-features, and remaining C channels of the $1^{st}$ third feature include a $1^{st}$ channel and a $2^{nd}$ channel of each sub-feature in the second portion of sub-features.

In a possible implementation of step 1005, K=4, and a concatenation manner of the third feature is as follows: A $1^{st}$ third feature includes a $4c^{th}$ channel of a $1^{st}$ sub-feature and a $(4c+2)^{th}$ channel of a $2^{nd}$ sub-feature; a $2^{nd}$ third feature includes a $(4c+1)^{th}$ channel of the $1^{st}$ sub-feature and a $(4c+3)^{th}$ channel of the $2^{nd}$ sub-feature; a $3^{rd}$ third feature includes a $(4c+2)^{th}$ channel of the $1^{st}$ sub-feature and a $4c^{th}$ channel of the $2^{nd}$ sub-feature, and a $4^{th}$ third feature includes a $(4c+3)^{th}$ channel of the $1^{st}$ sub-feature and a $(4c+1)^{th}$ channel of the $2^{nd}$ sub-feature. c is an integer, and number indexes start from 0.

In a possible implementation of step 1005, K=4, and a shape of each of the K third features is [C, h/2, w/2].

In a possible implementation of step 1005, K=3, shapes of two third features in the K third features are [C, h/2, w/2], and a shape of one third feature in the K third features is [2C, h/2, w/2]. In this application, a third feature whose quantity of channels is 2C is not limited to a specific third feature in the K third features, and may be the $1^{st}$ third feature, the $2^{nd}$ third feature, or the $3^{rd}$ third feature.

In step 1007, the picture is encoded or decoded based on the K third features. In a possible implementation of step 1007, encoding or decoding the picture based on the K third features includes: for k=1, 2, ..., and K, separately predicting a $k^{th}$ portion of a latent variable of the picture based on the $k^{th}$ third feature by using a context model; and encoding or decoding the picture based on a total of K portions of the latent variable. Specifically, on an encoder side, the K portions of the latent variable that are obtained through prediction may be combined into a complete predicted latent variable, a residual of the latent variable is obtained by calculating a difference between the original latent variable and the predicted latent variable, and then entropy encoding is performed on the residual of the latent variable to obtain a bitstream. On a decoder side, the K portions of the latent variable that are obtained through prediction may be combined into a complete predicted latent variable, entropy decoding is performed on a bitstream to obtain a residual of the latent variable, the predicted latent variable and the residual of the latent variable obtained through decoding are summed to obtain the latent variable, and then a decoder decodes the latent variable to obtain a reconstructed picture.

In a possible implementation of this application, the first feature represents a luminance component and/or a chrominance component of the picture. When the luminance component and the chrominance component of the picture are represented by using different first features, concatenation manners of third features respectively corresponding to the luminance component and the chrominance component of the picture may be the same or may be different.

When the method 1000 is implemented by an encoder, that is, when the method 1000 is an encoding method, the method further includes: encoding a first syntax element, where the first syntax element indicates a concatenation manner used for the third feature.

When the method 1000 is implemented by a decoder, that is, when the method 1000 is a decoding method, the method further includes: decoding a first syntax element, where the first syntax element indicates a concatenation manner used for the third feature.

In a possible implementation, the first syntax element is encoded in a picture header (picture header), a model header (model header), or a tools header (tools header) of a bitstream.

In a possible implementation, there is the following correspondence between a value of the first syntax element and a concatenation manner in Table 1.

| Value of the first syntax element | Concatenation number |
|---|---|
| 0 | 1 |
| 1 | 2 |
| 2 | 3 |
| 3 | 4 |
| 4 | 5 |
| 5 | 6 |
| 6 | 7 |
| 7 | 8 |
| 8 | 9 |
| 9 | 10 |
| 10 | 11 |
| 11 | 12 |
| 12 | 13 |
| 13 | 14 |
| ... | ... |

In a possible implementation, if an encoder side and a decoder side agree that concatenation manners used for the third feature are several manners in Table 1, the first syntax element may be transmitted by using fewer bits. For example, if there are only four possible concatenation manners for the third feature, only two bits are needed to transmit the first syntax element.

In a possible implementation, if the encoder side and the decoder side agree that the concatenation manner used for the third feature is a specific concatenation manner in Table 1, the first syntax element does not need to be transmitted.

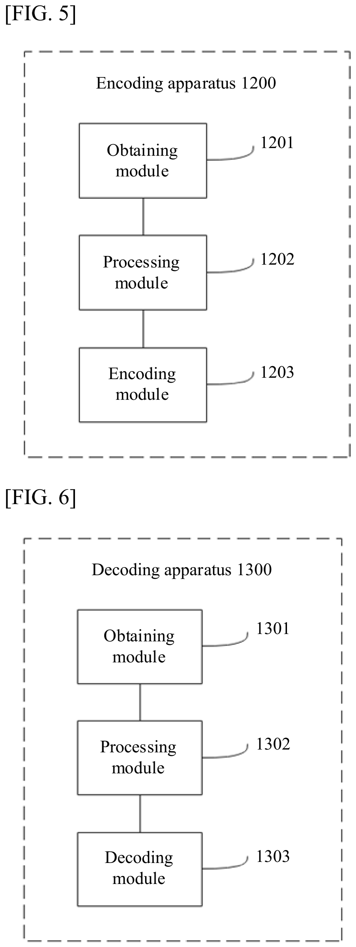

The foregoing describes the encoding and decoding methods in embodiments of this application, and the following describes apparatuses in embodiments of this application. Refer to FIG. 5. In embodiments of this application, an embodiment of an encoding apparatus 1200 includes an obtaining module 1201, a processing module 1202, and an encoding module 1203.

The obtaining module 1201 is configured to obtain a first feature of a picture, where a shape of the first feature is [C, h, w], C represents a quantity of channels of the first feature, h represents a length of the first feature, w represents a width of the first feature, C, h, and w are all positive integer multiples of 2, each channel of the first feature includes $(h/2) \times (w/2)$ $2 \times 2$ pixel blocks, and each pixel block includes four pixels: an upper left pixel, a lower right pixel, an upper right pixel, and a lower left pixel.

For descriptions of the obtaining module 1201, refer to the descriptions of step 1001 in the foregoing embodiments. Details are not described herein again.

The processing module 1202 is configured to shuffle the first feature to obtain a second feature, where a shape of the second feature is [4C, h/2, w/2], the second feature includes C sub-features, a shape of each sub-feature is [4, h/2, w/2], a $c^{th}$ sub-feature of the second feature corresponds to a $c^{th}$ channel of the first feature, c is a positive integer, $1 \leq c \leq C$, and four channels of the $c^{th}$ sub-feature respectively include upper left pixels, lower right pixels, upper right pixels, and lower left pixels in all pixel blocks of the $c^{th}$ channel of the first feature.

The processing module 1202 is further configured to concatenate the second feature to obtain K third features, where a shape of a $k^{th}$ third feature is [C, h/2, w/2], the $k^{th}$ third feature includes one channel of each sub-feature of the second feature, K is a positive integer greater than 2, k is a positive integer, and $1 \leq k \leq K$.

It should be noted that in this application, a value of C is not limited to 2 or 4, and values of h and w are not limited to 4, provided that C, h, and w are all positive integers and are integer multiples of 2. A channel arrangement of each of the K third features is not limited in this application, provided that N pixels at a same location in N channels of the $k^{th}$ third feature have different locations in N channels of the first feature, where N is a positive integer and $2 \leq N \leq C$. A value of K is not limited to 3 or 4 in this application, provided that K is a positive integer greater than 2.

In a possible implementation, the third feature obtained through concatenation meets the following condition: N pixels at a same location in N channels of the $k^{th}$ third feature have different locations in N channels of the first feature, where N is a positive integer and $2 \leq N \leq C$. A location of a pixel may be represented by using spatial coordinates [x, y], x represents a horizontal coordinate offset of the pixel relative to an upper left corner of the picture, and y represents a vertical coordinate offset of the pixel relative to the upper left corner of the picture. Alternatively, a location of a pixel may be indicated by using a representation symbol of the pixel. For example, in the examples shown in FIG. 4a to FIG. 4d, an upper left pixel, a lower right pixel, an upper right pixel, and a lower left pixel of each $2 \times 2$ pixel block in the $c^{th}$ channel of the first feature are respectively represented by 0, 1, 2, and 3, or 4, 5, 6, and 7, where c is a positive integer and $1 \leq c \leq C$. In other words, an upper left pixel of each pixel block in the same channel is represented by 0 or 4, a lower right pixel of each pixel block in the same channel is represented by 1 or 5, an upper right pixel of each pixel block in the same channel is represented by 2 or 5, and a lower left pixel of each pixel block in the same channel is represented by 4 or 7. The N pixels at the same location in the N channels of the $k^{th}$ third feature having different locations in the N channels of the first feature means that the following cases are excluded for pixels included in the N channels: (1) all the pixels are upper left pixels of $2 \times 2$ pixel blocks in the first feature; (2) all the pixels are lower right pixels of $2 \times 2$ pixel blocks in the first feature; (3) all the pixels are upper right pixels of $2 \times 2$ pixel blocks in the first feature; and (4) all the pixels are lower left pixels of $2 \times 2$ pixel blocks in the first feature.

In a possible implementation, C/2 channels of the $k^{th}$ third feature include an $i^{th}$ channel of each sub-feature in a first portion of sub-features of the second feature, remaining C/2 channels of the $k^{th}$ third feature include a $j^{th}$ channel of each sub-feature in a second portion of sub-features of the second feature, i and j are positive integers, $1 \leq i \leq 4$, $1 \leq j \leq 4$, $i \neq j$, the first portion of sub-features and the second portion of sub-features each include C/2 sub-features of the second feature, and the first portion of sub-features and the second portion of sub-features jointly form the second feature. A $1^{st}$ channel, a $2^{nd}$ channel, a $3^{rd}$ channel, and a $4^{th}$ channel of any sub-feature of the second feature sequentially include upper left pixels, lower right pixels, upper right pixels, and lower left pixels of all $2 \times 2$ pixel blocks in a same channel of the first feature. Therefore, through a limitation of $i \neq j$, it can be ensured that the C/2 channels and the remaining C/2 channels of the $k^{th}$ third feature include pixels at different locations in pixel blocks in the first feature, so as to ensure that in a division manner, same-channel adjacent pixel information and pixel information at a same location in a surrounding channel can be fully used when a context model predicts a latent variable, so that the latent variable predicted by the context model is more accurate, a quantity of bits required for transmitting a residual of the latent variable is reduced, and encoding efficiency is improved.

In a possible embodiment of the foregoing implementation, when K=4, C/2 channels of a $1^{st}$ third feature include a $1^{st}$ channel of each sub-feature in the first portion of sub-features, and remaining C/2 channels of the $1^{st}$ third feature include a $3^{rd}$ channel of each sub-feature in the second portion of sub-features; C/2 channels of a $2^{nd}$ third feature include a $2^{nd}$ channel of each sub-feature in the first portion of sub-features, and remaining C/2 channels of the $2^{nd}$ third feature include a $4^{th}$ channel of each sub-feature in the second portion of sub-features; C/2 channels of a $3^{rd}$ third feature include a $3^{rd}$ channel of each sub-feature in the first portion of sub-features, and remaining C/2 channels of the $3^{rd}$ third feature include a $1^{st}$ channel of each sub-feature in the second portion of sub-features; and C/2 channels of a $4^{th}$ third feature include a $4^{th}$ channel of each sub-feature in the first portion of sub-features, and remaining C/2 channels of the $4^{th}$ third feature include a $2^{nd}$ channel of each sub-feature in the second portion of sub-features. If C=2, it indicates the example shown in FIG. 4a. To be specific, the $1^{st}$ third feature includes a $1^{st}$ channel of a $1^{st}$ sub-feature of the second feature and a $3^{rd}$ channel of a $2^{nd}$ sub-feature of the second feature; the $2^{nd}$ third feature includes a $2^{nd}$ channel of the $1^{st}$ sub-feature of the second feature and a $4^{th}$ channel of the $2^{nd}$ sub-feature of the second feature; the $3^{rd}$ third feature includes a $3^{rd}$ channel of the $1^{st}$ sub-feature of the second feature and a $1^{st}$ channel of the $2^{nd}$ sub-feature of the second feature; and the $4^{th}$ third feature includes a $4^{th}$ channel of the $1^{st}$ sub-feature of the second feature and a $2^{nd}$ channel of the $2^{nd}$ sub-feature of the second feature.

In a possible implementation, K=4, and a concatenation manner of the third feature is as follows: A $1^{st}$ third feature includes a $4c^{th}$ channel of a $1^{st}$ sub-feature and a $(4c+2)^{th}$ channel of a $2^{nd}$ sub-feature; a $2^{nd}$ third feature includes a $(4c+1)^{th}$ channel of the $1^{st}$ sub-feature and a $(4c+3)^{th}$ channel of the $2^{nd}$ sub-feature; a $3^{rd}$ third feature includes a $(4c+2)^{th}$ channel of the $1^{st}$ sub-feature and a $4c^{th}$ channel of the $2^{nd}$ sub-feature, and a $4^{th}$ third feature includes a $(4c+3)^{th}$ channel of the $1^{st}$ sub-feature and a $(4c+1)^{th}$ channel of the $2^{nd}$ sub-feature. c is an integer, and number indexes start from 0.

In a possible implementation, K=4, and a shape of each of the K third features is [C, h/2, w/2].

In a possible implementation, K=3, shapes of two third features in the K third features are [C, h/2, w/2], and a shape of one third feature in the K third features is [2C, h/2, w/2]. In this application, a third feature whose quantity of channels is 2C is not limited to a specific third feature in the K third features, and may be the 1st third feature, the 2nd third feature, or the 3rd third feature.

For more detailed descriptions of the processing module 1202, refer to descriptions of steps 1003 and 1005 in the foregoing embodiment. Details are not described herein again.

The encoding module 1203 is configured to encode the picture based on the K third features.

In a possible implementation, encoding the picture based on the K third features includes: for k=1, 2, ..., and K, separately predicting a $k^{th}$ portion of a latent variable of the picture based on the $k^{th}$ third feature by using a context model; and encoding the picture based on a total of K portions of the latent variable. Specifically, the K portions of the latent variable that are obtained through prediction may be combined into a complete predicted latent variable, a residual of the latent variable is obtained by calculating a difference between the original latent variable and the predicted latent variable, and then entropy encoding is performed on the residual of the latent variable to obtain a bitstream.

For descriptions of the encoding module 1203, refer to the descriptions of step 1007 in the foregoing embodiments. Details are not described herein again.

In a possible implementation, the first feature represents a luminance component and/or a chrominance component of the picture. When the luminance component and the chrominance component of the picture are represented by using different first features, concatenation manners of third features respectively corresponding to the luminance component and the chrominance component of the picture may be the same or may be different.

Optionally, the encoding module 1203 is further configured to encode a first syntax element, where the first syntax element indicates a concatenation manner used for the third feature.

In a possible implementation, the first syntax element is encoded in a picture header (picture header), a model header (model header), or a tools header (tools header) of a bitstream.

Refer to FIG. 6. In embodiments of this application, an embodiment of a decoding apparatus 1300 includes an obtaining module 1301, a processing module 1302, and a decoding module 1303.

The obtaining module 1301 is configured to obtain a first feature of a picture, where a shape of the first feature is [C, h, w], C represents a quantity of channels of the first feature, h represents a length of the first feature, w represents a width of the first feature, C, h, and w are all positive integer multiples of 2, each channel of the first feature includes $(h/2) \times (w/2)$ $2 \times 2$ pixel blocks, and each pixel block includes four pixels: an upper left pixel, a lower right pixel, an upper right pixel, and a lower left pixel.

For descriptions of the obtaining module 1301, refer to the descriptions of step 1001 in the foregoing embodiments. Details are not described herein again.

The processing module 1302 is configured to shuffle the first feature to obtain a second feature, where a shape of the second feature is [4C, h/2, w/2], the second feature includes C sub-features, a shape of each sub-feature is [4, h/2, w/2], a $c^{th}$ sub-feature of the second feature corresponds to a $c^{th}$ channel of the first feature, c is a positive integer, $1 \leq c \leq C$, and four channels of the $c^{th}$ sub-feature respectively include upper left pixels, lower right pixels, upper right pixels, and lower left pixels in all pixel blocks of the $c^{th}$ channel of the first feature.

The processing module 1302 is further configured to concatenate the second feature to obtain K third features, where a shape of a $k^{th}$ third feature is [C, h/2, w/2], the $k^{th}$ third feature includes one channel of each sub-feature of the second feature, K is a positive integer greater than 2, k is a positive integer, and $1 \leq k \leq K$.

For descriptions of the processing module 1302, refer to descriptions of steps 1003 and 1005 in the foregoing embodiment. Details are not described herein again.

The decoding module 1303 is configured to perform decoding based on the K third features to obtain a reconstructed picture.

In a possible implementation, decoding the picture based on the K third features includes: for k=1, 2, ..., and K, separately predicting a $k^{th}$ portion of a latent variable of the picture based on the $k^{th}$ third feature by using a context model; and encoding or decoding the picture based on a total of K portions of the latent variable. Specifically, the K portions of the latent variable that are obtained through prediction may be combined into a complete predicted latent variable, entropy decoding is performed on a bitstream to obtain a residual of the latent variable, the predicted latent variable and the residual of the latent variable obtained through decoding are summed to obtain the latent variable, and then a decoder decodes the latent variable to obtain the reconstructed picture.

For descriptions of the decoding module 1303, refer to the descriptions of step 1007 in the foregoing embodiments. Details are not described herein again.

In a possible implementation, the first feature represents a luminance component and/or a chrominance component of the picture. When the luminance component and the chrominance component of the picture are represented by using different first features, concatenation manners of third features respectively corresponding to the luminance component and the chrominance component of the picture may be the same or may be different.

Optionally, the decoding module 1303 is further configured to decode a first syntax element, where the first syntax element indicates a concatenation manner used for the third feature.

In a possible implementation, the first syntax element is encoded in a picture header (picture header), a model header (model header), or a tools header (tools header) of a bitstream.

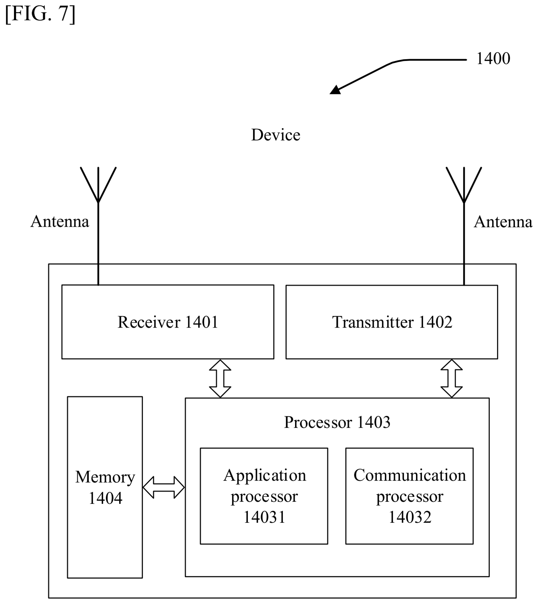

The following describes a device provided in an embodiment of this application. The device may be an encoding apparatus or a decoding apparatus. Refer to FIG. 7. FIG. 7 is a diagram of a structure of a device according to an embodiment of this application. The device 1400 may be specifically represented as a virtual reality VR device, a mobile phone, a tablet, a notebook computer, an intelligent wearable device, or the like. This is not limited herein. The apparatus described in the embodiment corresponding to FIG. 5 or FIG. 6 may be deployed on the device 1400. Specifically, the device 1400 includes: a receiver 1401, a transmitter 1402, a processor 1403, and a memory 1404 (there may be one or more processors 1403 in the device 1400, and one processor is used as an example in FIG. 7). The processor 1403 may include an application processor 14031 and a communication processor 14032. In some embodiments of this application, the receiver 1401, the transmitter 1402, the processor 1403, and the memory 1404 may be connected through a bus or in another manner.

The memory 1404 may include a read-only memory and a random access memory, and provide instructions and data for the processor 1403. A part of the memory 1404 may further include a non-volatile random access memory (non-volatile random access memory, NVRAM). The memory 1404 stores operation instructions of the processor, an executable module or a data structure, a subset thereof, or an extended set thereof. The operation instructions may include various operation instructions used to implement various operations.

The processor 1403 controls an operation of the device. In specific application, components of the device are coupled together through a bus system. In addition to a data bus, the bus system may further include a power bus, a control bus, a status signal bus, and the like. However, for clear description, various buses are referred to as the bus system in the figure.

The method disclosed in embodiments of this application may be applied to the processor 1403, or implemented by the processor 1403. The processor 1403 may be an integrated circuit chip and has a signal processing capability. In an implementation process, steps of the foregoing method may be completed by using an integrated logic circuit of hardware in the processor 1403 or instructions in a form of software. The processor 1403 may be a general-purpose processor, a digital signal processor (digital signal processor, DSP), a microprocessor, or a microcontroller, and may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 1403 may implement or perform the methods, steps, and logical block diagrams that are disclosed in embodiments of this application. The general-purpose processor may be a microprocessor, or the processor may be any conventional processor or the like. The steps of the methods disclosed with reference to embodiments of this application may be directly performed by a hardware decoding processor, or performed by a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 1404. The processor 1403 reads information in the memory 1404, and completes the steps of the foregoing methods in combination with hardware of the processor.

The receiver 1401 may be configured to: receive input digit or character information, and generate a signal input related to a related setting and function control of the device. The transmitter 1402 may be configured to output digit or character information through a first interface. The transmitter 1402 may be further configured to send instructions to a disk group through the first interface, to modify data in the disk group. The transmitter 1402 may further include a display device like a display.

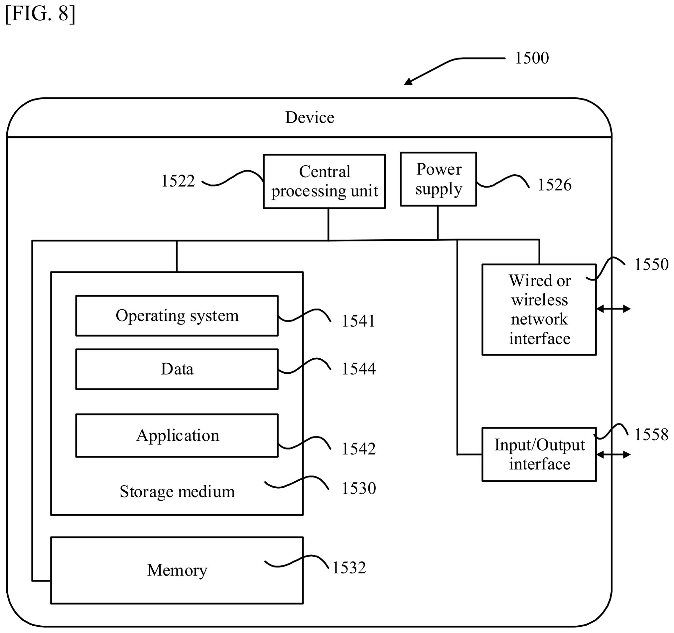

An embodiment of this application further provides a device. The device may be an encoding apparatus or a decoding apparatus. Refer to FIG. 8. FIG. 8 is a diagram of a structure of a device according to an embodiment of this application. The apparatus described in the embodiment corresponding to FIG. 5 or FIG. 6 may be deployed on the device 1500. Specifically, the device 1500 is implemented by one or more servers. The device 1500 may vary greatly due to different configurations or performance, and may include one or more central processing units (central processing units, CPU) 1522 (for example, one or more processors), a memory 1532, and one or more storage media 1530 (for example, one or more mass storage devices) that stores an application 1542 or data 1544. The memory 1532 and the storage medium 1530 may be transitory storage or persistent storage. The program stored in the storage medium 1530 may include one or more modules (not shown in the figure), and each module may include a series of instruction operations for the device. Further, the central processing unit 1522 may be configured to communicate with the storage medium 1530, and perform, on the device 1500, the series of instruction operations in the storage medium 1530.

The device 1500 may further include one or more power supplies 1526, one or more wired or wireless network interfaces 1550, one or more input/output interfaces 1558, and/or one or more operating systems 1541, such as Windows ServerTM, Mac OS XTM, UnixTM, LinuxTM, and FreeBSDTM.

An embodiment of this application further provides a computer program product (or referred to as a computer program) that stores one or more computers. When the computer program product is executed by a processor, the processor performs the method in the possible implementations of the foregoing picture processing device.

An embodiment of this application further provides a chip system. The chip system includes at least one processor, configured to support a terminal device or a server in implementing functions in the foregoing possible implementations of the picture processing device. Optionally, the chip system further includes an interface circuit, and the interface circuit provides program instructions and/or data for the at least one processor. In a possible design, the chip system may further include a memory. The memory is configured to store program instructions and data that are necessary for the terminal device. The chip system may include a chip, or may include a chip and another discrete component.

An embodiment of this application further provides a readable storage medium. The readable medium stores a bitstream obtained through encoding by using the method or the apparatus in the embodiments shown in FIG. 1a to FIG. 6.

An embodiment of this application further provides a bitstream storage device, including at least one storage medium and a communication interface. The communication interface is configured to receive or send a bitstream. The at least one storage medium is configured to store the bitstream. The bitstream is obtained by an encoder through encoding by using the method or the apparatus in the embodiments shown in FIG. 1a to FIG. 6.

An embodiment of this application further provides a bitstream storage method. The method includes: receiving a bitstream through a communication interface; and storing the bitstream in one or more storage media, where the bitstream is obtained by an encoder through encoding by using the method or the apparatus in the embodiments shown in FIG. 1a to FIG. 6.

An embodiment of this application further provides a bitstream delivery system. The system includes at least one storage medium and a video stream device. The at least one storage medium is configured to store a bitstream, and the bitstream is obtained by an encoder through encoding by using the method or the apparatus in the embodiments shown in FIG. 1a to FIG. 6. The video stream device is configured to respond to a request of a decoder, so that a target bitstream in the at least one storage medium is sent to the decoder.

An embodiment of this application further provides a bitstream distribution method. The method includes: receiving a first request; selecting a target bitstream from at least one storage medium in response to the first request; and sending the target bitstream to a destination device. The at least one storage medium is configured to store the bitstream, and the bitstream is obtained by an encoder through encoding by using the method or the apparatus in the embodiments shown in FIG. 1a to FIG. 6.

An embodiment of this application further provides a bitstream processing system. The system includes a picture source device, an encoder device, one or more storage media, and a destination device. The picture source device is configured to provide picture data; the encoder device is configured to obtain the picture data from the picture source device through an interface, and encode the picture data to obtain one or more bitstreams, where the bitstreams are obtained by the encoder through encoding by using the method or the apparatus in the embodiments shown in FIG. 1a to FIG. 6; the encoder device is configured to store the one or more bitstreams in the one or more storage media; or the encoder device is configured to encapsulate the one or more bitstreams to obtain a transmission bitstream; the encoder device is configured to transmit the transmission bitstream to the destination device through a communication link or a communication network; the destination device is configured to decapsulate the transmission bitstream to obtain the one or more bitstreams; and the destination device is configured to decode the one or more bitstreams to obtain decoded data.

It may be clearly understood by a person skilled in the art that, for the purpose of convenient and brief description, for a detailed working process of the foregoing described system, apparatus, and unit, refer to a corresponding process in the foregoing method embodiment. Details are not described herein again.

In the several embodiments provided in this application, it should be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. Any implementations provided in this application may be combined with each other in any manner on a premise that logic is smooth. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, it should be noted that the described apparatus embodiment is merely an example. The units described as separate parts may or may not be physically separate, and parts displayed as units may or may not be physical units, may be located in one place, or may be distributed on a plurality of network units. Some or all of the modules may be selected according to an actual requirement to achieve the objectives of the solutions in the embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by using software in addition to necessary universal hardware, or by using dedicated hardware, including a dedicated integrated circuit, a dedicated CPU, a dedicated memory, a dedicated component, and the like. Generally, any function that is performed by a computer program can be easily implemented by using corresponding hardware. Moreover, a specific hardware structure used to implement a same function may be in various forms, for example, in a form of an analog circuit, a digital circuit, or a dedicated circuit. However, as for this application, a software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a device, or a network device) to perform the methods described in embodiments of this application.

All or some of the foregoing embodiments may be implemented by software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, device, or data center to another website, computer, device, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

1. A picture encoding or decoding method, comprising: obtaining a first feature of a picture, wherein a shape of the first feature is [C, h, w], C represents a quantity of channels of the first feature, h represents a length of the first feature, w represents a width of the first feature, C, h, and w are all positive integer multiples of 2, each channel of the first feature comprises $(h/2)\times(w/2)$ $2\times2$ pixel blocks, and each pixel block comprises four pixels:

   an upper left pixel, a lower right pixel, an upper right pixel, and a lower left pixel;
   shuffling the first feature to obtain a second feature, wherein a shape of the second feature is [4C, h/2, w/2], the second feature comprises C sub-features, a shape of each sub-feature is [4, h/2, w/2], a $c^{th}$ sub-feature of the second feature corresponds to a $c^{th}$ channel of the first feature, c is a positive integer, $1\leq c\leq C$, and four channels of the $c^{th}$ sub-feature respectively comprise upper left pixels, lower right pixels, upper right pixels, and lower left pixels in all pixel blocks of the $c^{th}$ channel of the first feature;
   concatenating the second feature to obtain K third features, wherein a shape of a $k^{th}$ third feature is [C, h/2, w/2], the $k^{th}$ third feature comprises one channel of each sub-feature of the second feature, K is a positive integer greater than 2, k is a positive integer, and $1\leq k\leq K$; and
   encoding or decoding the picture based on the K third features.

2. The method according to claim 1, wherein N pixels at a same location in N channels of the $k^{th}$ third feature have different locations in N channels of the first feature, wherein N is a positive integer and $2\leq N\leq C$.

3. The method according to claim 1 or 2, wherein C/2 channels of the $k^{th}$ third feature comprise an $i^{th}$ channel of each sub-feature in a first portion of sub-features of the second feature, remaining C/2 channels of the $k^{th}$ third feature comprise a $j^{th}$ channel of each sub-feature in a second portion of sub-features of the second feature, i and j are positive integers, $1\leq i\leq4$, $1\leq j\leq4$, $i\neq j$, the first portion of sub-features and the second portion of sub-features each comprise C/2 sub-features of the second feature, and the first portion of sub-features and the second portion of sub-features jointly form the second feature.

4. The method according to any one of claims 1 to 3, wherein K=4, and a shape of each of the K third features is [C, h/2, w/2].

5. The method according to claim 1 or 2, wherein K=3, shapes of two third features in the K third features are [C, h/2, w/2], and a shape of one third feature in the K third features is [2C, h/2, w/2].

6. The method according to claim 3, wherein when K=4,

C/2 channels of a 1st third feature comprise a 1st channel of each sub-feature in the first portion of sub-features, and remaining C/2 channels of the 1st third feature comprise a 3rd channel of each sub-feature in the second portion of sub-features;
C/2 channels of a 2nd third feature comprise a 2nd channel of each sub-feature in the first portion of sub-features, and remaining C/2 channels of the 2nd third feature comprise a 4th channel of each sub-feature in the second portion of sub-features;
C/2 channels of a 3rd third feature comprise a 3rd channel of each sub-feature in the first portion of sub-features, and remaining C/2 channels of the 3rd third feature comprise a 1st channel of each sub-feature in the second portion of sub-features; and
C/2 channels of a 4th third feature comprise a 4th channel of each sub-feature in the first portion of sub-features, and remaining C/2 channels of the 4th third feature comprise a 2nd channel of each sub-feature in the second portion of sub-features.

7. The method according to claim 6, wherein when C=2,

the 1st third feature comprises a 1st channel of a 1st sub-feature of the second feature and a 3rd channel of a 2nd sub-feature of the second feature;
the 2nd third feature comprises a 2nd channel of the 1st sub-feature of the second feature and a 4th channel of the 2nd sub-feature of the second feature;
the 3rd third feature comprises a 3rd channel of the 1st sub-feature of the second feature and a 1st channel of the 2nd sub-feature of the second feature; and
the 4th third feature comprises a 4th channel of the 1st sub-feature of the second feature and a 2nd channel of the 2nd sub-feature of the second feature.

8. The method according to claim 3, wherein when K=4,

C/2 channels of a 1st third feature comprise a 1st channel of each sub-feature in the first portion of sub-features, and remaining C/2 channels of the 1st third feature comprise a 4th channel of each sub-feature in the second portion of sub-features;
C/2 channels of a 2nd third feature comprise a 2nd channel of each sub-feature in the first portion of sub-features, and remaining C/2 channels of the 2nd third feature comprise a 3rd channel of each sub-feature in the second portion of sub-features;
C/2 channels of a 3rd third feature comprise a 3rd channel of each sub-feature in the first portion of sub-features, and remaining C/2 channels of the 3rd third feature comprise a 2nd channel of each sub-feature in the second portion of sub-features; and
C/2 channels of a 4th third feature comprise a 4th channel of each sub-feature in the first portion of sub-features, and remaining C/2 channels of the 4th third feature comprise a 1st channel of each sub-feature in the second portion of sub-features.

9. The method according to claim 3, wherein when K=4,

C/2 channels of a 1st third feature comprise a 1st channel of each sub-feature in the first portion of sub-features, and remaining C/2 channels of the 1st third feature comprise a 3rd channel of each sub-feature in the second portion of sub-features;
C/2 channels of a 2nd third feature comprise a 2nd channel of each sub-feature in the first portion of sub-features, and remaining C/2 channels of the 2nd third feature comprise a 4th channel of each sub-feature in the second portion of sub-features;
C/2 channels of a 3rd third feature comprise a 3rd channel of each sub-feature in the first portion of sub-features, and remaining C/2 channels of the 3rd third feature comprise a 2nd channel of each sub-feature in the second portion of sub-features; and

C/2 channels of a 4th third feature comprise a 4th channel of each sub-feature in the first portion of sub-features, and remaining C/2 channels of the 4th third feature comprise a 1st channel of each sub-feature in the second portion of sub-features.

10. The method according to claim 3, wherein when K=4,

C/2 channels of a 1st third feature comprise a 1st channel of each sub-feature in the first portion of sub-features, and remaining C/2 channels of the 1st third feature comprise a 4th channel of each sub-feature in the second portion of sub-features;
C/2 channels of a 2nd third feature comprise a 2nd channel of each sub-feature in the first portion of sub-features, and remaining C/2 channels of the 2nd third feature comprise a 3rd channel of each sub-feature in the second portion of sub-features;
C/2 channels of a 3rd third feature comprise a 3rd channel of each sub-feature in the first portion of sub-features, and remaining C/2 channels of the 3rd third feature comprise a 1st channel of each sub-feature in the second portion of sub-features; and
C/2 channels of a 4th third feature comprise a 4th channel of each sub-feature in the first portion of sub-features, and remaining C/2 channels of the 4th third feature comprise a 2nd channel of each sub-feature in the second portion of sub-features.

11. The method according to claim 3, wherein when K=3, shapes of a 1st third feature and a 2nd third feature are [C, h/2, w/2], and a shape of a 3rd third feature is [2C, h/2, w/2];

C/2 channels of the 1st third feature comprise a 1st channel of each sub-feature in the first portion of sub-features, and remaining C/2 channels of the 1st third feature comprise a 4th channel of each sub-feature in the second portion of sub-features;
C/2 channels of the 2nd third feature comprise a 2nd channel of each sub-feature in the first portion of sub-features, and remaining C/2 channels of the 2nd third feature comprise a 3rd channel of each sub-feature in the second portion of sub-features; and
C channels of the 3rd third feature comprise a 3rd channel and a 4th channel of each sub-feature in the first portion of sub-features, and remaining C channels of the 3rd third feature comprise a 1st channel and a 2nd channel of each sub-feature in the second portion of sub-features.

12. The method according to any one of claims 1 to 11, wherein encoding or decoding the picture based on the K third features comprises:

for k=1, 2, ..., and K, separately predicting a $k^{th}$ portion of a latent variable of the picture based on the $k^{th}$ third feature by using a context model; and
encoding or decoding the picture based on a total of K portions of the latent variable.

13. The method according to any one of claims 1 to 12, wherein the first feature represents a luminance component and/or a chrominance component of the picture.

14. The method according to any one of claims 1 to 13, wherein when the method is an encoding method, the method further comprises:
encoding a first syntax element, wherein the first syntax element indicates a concatenation manner used for the third feature.

15. The method according to any one of claims 1 to 13, wherein when the method is a decoding method, the method further comprises:
decoding a first syntax element, wherein the first syntax element indicates a concatenation manner used for the third feature.

16. A picture encoding apparatus, wherein the apparatus comprises:

an obtaining module, configured to obtain a first feature of a picture, wherein a shape of the first feature is [C, h, w], C represents a quantity of channels of the first feature, h represents a length of the first feature, w represents a width of the first feature, C, h, and w are all positive integer multiples of 2, each channel of the first feature comprises (h/2)×(w/2) 2×2 pixel blocks, and each pixel block comprises four pixels: an upper left pixel, a lower right pixel, an upper right pixel, and a lower left pixel;

a processing module, configured to shuffle the first feature to obtain a second feature, wherein a shape of the second feature is [4C, h/2, w/2], the second feature comprises C sub-features, a shape of each sub-feature is [4, h/2, w/2], a $c^{th}$ sub-feature of the second feature corresponds to a $c^{th}$ channel of the first feature, c is a positive integer, $1 \leq c \leq C$, and four channels of the $c^{th}$ sub-feature respectively comprise upper left pixels, lower right pixels, upper right pixels, and lower left pixels in all pixel blocks of the $c^{th}$ channel of the first feature, wherein the processing module is further configured to concatenate the second feature to obtain K third features, wherein a shape of a $k^{th}$ third feature is [C, h/2, w/2], the $k^{th}$ third feature comprises one channel of each sub-feature of the second feature, K is a positive integer greater than 2, k is a positive integer, and $1 \leq k \leq K$; and

an encoding module, configured to encode the picture based on the K third features.

17. The encoding apparatus according to claim 16, wherein N pixels at a same location in N channels of the $k^{th}$ third feature have different locations in N channels of the first feature, wherein N is a positive integer and $2 \leq N \leq C$.

18. The encoding apparatus according to claim 16 or 17, wherein C/2 channels of the $k^{th}$ third feature comprise an $i^{th}$ channel of each sub-feature in a first portion of sub-features of the second feature, remaining C/2 channels of the $k^{th}$ third feature comprise a $j^{th}$ channel of each sub-feature in a second portion of sub-features of the second feature, i and j are positive integers, $1 \leq i \leq 4$, $1 \leq j \leq 4$, $i \neq j$, the first portion of sub-features and the second portion of sub-features each comprise C/2 sub-features of the second feature, and the first portion of sub-features and the second portion of sub-features jointly form the second feature.

19. The encoding apparatus according to claim 18, wherein when K=4,

C/2 channels of a $1^{st}$ third feature comprise a $1^{st}$ channel of each sub-feature in the first portion of sub-features, and remaining C/2 channels of the $1^{st}$ third feature comprise a $3^{rd}$ channel of each sub-feature in the second portion of sub-features;
C/2 channels of a $2^{nd}$ third feature comprise a $2^{nd}$ channel of each sub-feature in the first portion of sub-features, and remaining C/2 channels of the $2^{nd}$ third feature comprise a $4^{th}$ channel of each sub-feature in the second portion of sub-features;
C/2 channels of a $3^{rd}$ third feature comprise a $3^{rd}$ channel of each sub-feature in the first portion of sub-features, and remaining C/2 channels of the $3^{rd}$ third feature comprise a $1^{st}$ channel of each sub-feature in the second portion of sub-features; and
C/2 channels of a $4^{th}$ third feature comprise a $4^{th}$ channel of each sub-feature in the first portion of sub-features, and remaining C/2 channels of the $4^{th}$ third feature comprise a $2^{nd}$ channel of each sub-feature in the second portion of sub-features.

20. The encoding apparatus according to claim 19, wherein when C=2,

the $1^{st}$ third feature comprises a $1^{st}$ channel of a $1^{st}$ sub-feature of the second feature and a $3^{rd}$ channel of a $2^{nd}$ sub-feature of the second feature;
the $2^{nd}$ third feature comprises a $2^{nd}$ channel of the $1^{st}$ sub-feature of the second feature and a $4^{th}$ channel of the $2^{nd}$ sub-feature of the second feature;
the $3^{rd}$ third feature comprises a $3^{rd}$ channel of the $1^{st}$ sub-feature of the second feature and a $1^{st}$ channel of the $2^{nd}$ sub-feature of the second feature; and
the $4^{th}$ third feature comprises a $4^{th}$ channel of the $1^{st}$ sub-feature of the second feature and a $2^{nd}$ channel of the $2^{nd}$ sub-feature of the second feature.

21. A picture decoding apparatus, wherein the apparatus comprises:

an obtaining module, configured to obtain a first feature of a picture, wherein a shape of the first feature is [C, h, w], C represents a quantity of channels of the first feature, h represents a length of the first feature, w represents a width of the first feature, C, h, and w are all positive integer multiples of 2, each channel of the first feature comprises (h/2)×(w/2) 2×2 pixel blocks, and each pixel block comprises four pixels: an upper left pixel, a lower right pixel, an upper right pixel, and a lower left pixel;
a processing module, configured to shuffle the first feature to obtain a second feature, wherein a shape of the second feature is [4C, h/2, w/2], the second feature comprises C sub-features, a shape of each sub-feature is [4, h/2, w/2], a $c^{th}$ sub-feature of the second feature corresponds to a $c^{th}$ channel of the first feature, c is a positive integer, $1 \leq c \leq C$, and four channels of the $c^{th}$ sub-feature respectively comprise upper left pixels, lower right pixels,

27

upper right pixels, and lower left pixels in all pixel blocks of the $c^{th}$ channel of the first feature, wherein the processing module is further configured to concatenate the second feature to obtain K third features, wherein a shape of a $k^{th}$ third feature is [C, h/2, w/2], the $k^{th}$ third feature comprises one channel of each sub-feature of the second feature, K is a positive integer greater than 2, k is a positive integer, and $1 \leq k \leq K$; and

a decoding module, configured to perform decoding based on the K third features to obtain a reconstructed picture.

22. The decoding apparatus according to claim 21, wherein N pixels at a same location in N channels of the $k^{th}$ third feature have different locations in N channels of the first feature, wherein N is a positive integer and $2 \leq N \leq C$.

23. The decoding apparatus according to claim 21 or 22, wherein C/2 channels of the $k^{th}$ third feature comprise an $i^{th}$ channel of each sub-feature in a first portion of sub-features of the second feature, remaining C/2 channels of the $k^{th}$ third feature comprise a $j^{th}$ channel of each sub-feature in a second portion of sub-features of the second feature, i and j are positive integers, $1 \leq i \leq 4$, $1 \leq j \leq 4$, $i \neq j$, the first portion of sub-features and the second portion of sub-features each comprise C/2 sub-features of the second feature, and the first portion of sub-features and the second portion of sub-features jointly form the second feature.

24. The decoding apparatus according to claim 23, wherein when K=4,

C/2 channels of a $1^{st}$ third feature comprise a $1^{st}$ channel of each sub-feature in the first portion of sub-features, and remaining C/2 channels of the $1^{st}$ third feature comprise a $3^{rd}$ channel of each sub-feature in the second portion of sub-features;
C/2 channels of a $2^{nd}$ third feature comprise a $2^{nd}$ channel of each sub-feature in the first portion of sub-features, and remaining C/2 channels of the $2^{nd}$ third feature comprise a $4^{th}$ channel of each sub-feature in the second portion of sub-features;
C/2 channels of a $3^{rd}$ third feature comprise a $3^{rd}$ channel of each sub-feature in the first portion of sub-features, and remaining C/2 channels of the $3^{rd}$ third feature comprise a $1^{st}$ channel of each sub-feature in the second portion of sub-features; and
C/2 channels of a $4^{th}$ third feature comprise a $4^{th}$ channel of each sub-feature in the first portion of sub-features, and remaining C/2 channels of the $4^{th}$ third feature comprise a $2^{nd}$ channel of each sub-feature in the second portion of sub-features.

25. The decoding apparatus according to claim 24, wherein when C=2,

the $1^{st}$ third feature comprises a $1^{st}$ channel of a $1^{st}$ sub-feature of the second feature and a $3^{rd}$ channel of a $2^{nd}$ sub-feature of the second feature;
the $2^{nd}$ third feature comprises a $2^{nd}$ channel of the $1^{st}$ sub-feature of the second feature and a $4^{th}$ channel of the $2^{nd}$ sub-feature of the second feature;
the $3^{rd}$ third feature comprises a $3^{rd}$ channel of the $1^{st}$ sub-feature of the second feature and a $1^{st}$ channel of the $2^{nd}$ sub-feature of the second feature; and
the $4^{th}$ third feature comprises a $4^{th}$ channel of the $1^{st}$ sub-feature of the second feature and a $2^{nd}$ channel of the $2^{nd}$ sub-feature of the second feature.

26. An encoding or decoding device, comprising a processor, wherein the processor is coupled to a memory, the memory is configured to store a program or instructions, and when the program or the instructions are executed by the processor, the encoding or decoding device is enabled to perform the method according to any one of claims 1 to 15.

27. An encoding and decoding system, wherein the encoding and decoding system comprises the encoding apparatus according to any one of claims 16 to 20, and/or the decoding apparatus according to any one of claims 21 to 25.

28. A computer-readable storage medium, wherein the medium stores computer instructions, and when the computer instructions are executed by a computer, the method according to any one of claims 1 to 15 is implemented.

29. A computer program product, comprising computer instructions, wherein when the computer instructions are run on a computer, the computer is enabled to perform the method according to any one of claims 1 to 15.

30. A computer-readable storage medium, wherein the computer-readable medium stores a bitstream obtained through encoding by using the encoding method according to any one of claims 1 to 15.

31. A bitstream storage device, comprising at least one storage medium and a communication interface, wherein

the communication interface is configured to receive or send a bitstream;
the at least one storage medium is configured to store the bitstream; and
the bitstream is obtained by an encoder through encoding by using the encoding method according to any one of claims 1 to 15.

32. A bitstream storage method, comprising:

receiving a bitstream through a communication interface; and
storing the bitstream in one or more storage media, wherein the bitstream is obtained by an
encoder through encoding by using the encoding method according to any one of claims 1 to 15.

33. A bitstream delivery system, comprising at least one storage medium and a video stream device, wherein

the at least one storage medium is configured to store a bitstream, and the bitstream is obtained by an encoder through encoding by using the encoding method according to any one of claims 1 to 15; and
the video stream device is configured to respond to a request of a decoder, to send the bitstream in the at least one storage medium to the decoder.

34. A bitstream distribution method, comprising:

receiving a first request;
selecting a bitstream from at least one storage medium in response to the first request; and
sending the bitstream to a destination device, wherein
the at least one storage medium is configured to store the bitstream, and the bitstream is obtained by an encoder through encoding by using the encoding method according to any one of claims 1 to 15.

35. A bitstream processing system, comprising a picture source device, an encoder device, one or more storage media, and a destination device, wherein

the picture source device is configured to provide picture data;
the encoder device is configured to obtain the picture data from the picture source device through an interface, and encode the picture data to obtain one or more bitstreams, wherein the bitstreams are obtained by the encoder through encoding by using the encoding method according to any one of claims 1 to 15;
the encoder device is configured to store the one or more bitstreams in the one or more storage media; or
the encoder device is configured to encapsulate the one or more bitstreams to obtain a transmission bitstream;
the encoder device is configured to transmit the transmission bitstream to the destination device through a communication link or a communication network;
the destination device is configured to decapsulate the transmission bitstream to obtain the one or more bitstreams; and
the destination device is configured to decode the one or more bitstreams to obtain decoded data.

[FIG. 1a]

```
┌──────────┐      ┌──────────┐      ┌──────────────┐      ┌──────────┐      ┌──────────────┐
│Input data│─────▶│AI encoding│────▶│  Storage/    │────▶│AI decoding│────▶│ Reconstructed │
│          │      │   unit    │      │Transmission unit│    │   unit    │      │    data       │
└──────────┘      └──────────┘      └──────────────┘      └──────────┘      └──────────────┘
```

[FIG. 1b]

```
                  ┌──────────┐      ┌──────────┐      ┌──────────────┐
                  │Input data│─────▶│AI encoding│────▶│ File saving unit│
                  │          │      │   unit    │      │              │
                  └──────────┘      └──────────┘      └──────────────┘
                                                                        │
Compression                                                             ▼
  process                                                          ┌────────┐
- - - - - - - - - - - - - - - - - - - - - - - - - - - - - - - - -  │  File  │
Decompression                                                      └────────┘
  process                                                               │
              ┌──────────────┐    ┌──────────┐    ┌──────────────┐      │
              │ Reconstructed │◀───│AI decoding│◀──│ File loading │◀─────┘
              │    data       │    │   unit    │    │    unit      │
              └──────────────┘    └──────────┘    └──────────────┘
```

[FIG. 1c]

```
                          Terminal ¦ Cloud
        ┌──────────┐      ┌──────────┐   ┌──────────┐   ┌──────────┐
        │Input data│─────▶│ Encoding │──▶│ Decoding │──▶│AI encoding│
        │          │      │   unit   │   │   unit   │   │   unit    │
        └──────────┘      └──────────┘   └──────────┘   └──────────┘
Compression                                                          │
  process                                                            ▼
- - - - - - - - - - - - - - - - - - - - - - - - - - - - - - - -┌──────────┐
Decompression                                                  │Bitstream/│
  process                                                      │   File   │
                                                               └──────────┘
        ┌──────────────┐   ┌──────────┐   ┌──────────┐   ┌──────────┐    │
        │ Reconstructed │◀──│ Decoding │◀──│ Encoding │◀──│AI decoding│◀──┘
        │    data       │   │   unit   │   │   unit   │   │   unit    │
        └──────────────┘   └──────────┘   └──────────┘   └──────────┘
```

[FIG. 2a]

EP 4 734 525 A1

[FIG. 2b]

Neural-network processing unit 40

[FIG. 3]

1000

1001: Obtain a first feature of a picture, where a shape of the first feature is [C, h, w]

1003: Shuffle the first feature to obtain a second feature, where a shape of the second feature is [4C, h/2, w/2], the second feature includes C sub-features, and a shape of each sub-feature is [4, h/2, w/2]

1005: Concatenate the second feature to obtain K third features, where a shape of a $k^{th}$ third feature is [C, h/2, w/2]

1007: Encode or decode the picture based on the K third features

[FIG. 4a]

$\hat{p}[C, h, w]$

Down-shuffle (2)

$\hat{p}[4C, h/2, w/2]$

Cross-cat

$\hat{p}_k[C, h/2, w/2]$,
k = 1,2, ..., K,
K = 4

EP 4 734 525 A1

34

[FIG. 4b]

$\hat{p}[C, h, w]$

Down-shuffle (2)

$\hat{p}[4C, h/2, w/2]$

Cross-cat

$\hat{p}_k[C, h/2, w/2]$,
k = 1,2, ..., K,
K = 4

[FIG. 4c]

$\hat{p}[C, h, w]$

Down-shuffle (2)

$\hat{p}[4C, h/2, w/2]$

Cross-cat

$\hat{p}_k[C, h/2, w/2], k = 1 \text{ or } 2,$
$\hat{p}_k[2C, h/2, w/2], k = K,$
$K = 3$

EP 4 734 525 A1

[FIG. 4d]

$\hat{p}[C, h, w]$

Down-shuffle (2)

$\hat{p}[4C, h/2, w/2]$

Cross-cat

$\hat{p}_k[C, h/2, w/2],$
$k = 1, 2, \ldots, K,$
$K = 4$

EP 4 734 525 A1

[FIG. 4e]

$\hat{p}[C, h, w]$

Down-shuffle (2)

$\hat{p}[4C, h/2, w/2]$

Cross-cat

$\hat{p}_k[C, h/2, w/2]$,
k = 1,2, ..., K,
K = 4

EP 4 734 525 A1

[FIG. 4f]

$\hat{p}[C, h, w]$

Down-shuffle (2)

$\hat{p}[4C, h/2, w/2]$

Cross-cat

$\hat{p}_k[C, h/2, w/2]$,
k = 1,2,…,K,
K = 4

[FIG. 5]

Encoding apparatus 1200

Obtaining module — 1201

Processing module — 1202

Encoding module — 1203

[FIG. 6]

Decoding apparatus 1300

Obtaining module — 1301

Processing module — 1302

Decoding module — 1303

[FIG. 7]

1400

Device

Antenna                                    Antenna

| Receiver 1401 | Transmitter 1402 |

Processor 1403

| Memory 1404 | Application processor 14031 | Communication processor 14032 |

[FIG. 8]

1500

Device

1522 — Central processing unit | Power supply — 1526

Operating system ~ 1541

Data ~ 1544

Application ~ 1542

Storage medium ~ 1530

Memory ~ 1532

Wired or wireless network interface ~ 1550

Input/Output interface ~ 1558

## INTERNATIONAL SEARCH REPORT

| International application No. |
| --- |
| **PCT/CN2024/126865** |

### A. CLASSIFICATION OF SUBJECT MATTER

H04N19/91(2014.01)i; G06N3/082(2023.01)i

According to International Patent Classification (IPC) or to both national classification and IPC

### B. FIELDS SEARCHED

Minimum documentation searched (classification system followed by classification symbols)

IPC:H04N,G06N

Documentation searched other than minimum documentation to the extent that such documents are included in the fields searched

Electronic data base consulted during the international search (name of data base and, where practicable, search terms used)

CNTXT, ENTXTC, ENTXT, DWPI, IEEE, CNKI, JVET: 视频, 编码, 解码, 超编码, 超解码, 图像, 图象, 图片, 神经, 网络, 通道, 像素, 特征, 长, 宽, 高, 混洗, 混合, 排列, 排序, 组合, 下采样, 隐变量, 上下文, video, encode, decode, image, picture, hyper, neural, network, channel, pixel, feature, long, wide, height, shuffle, blend, order, combine, down sample, hidden variable, context

### C. DOCUMENTS CONSIDERED TO BE RELEVANT

| Category* | Citation of document, with indication, where appropriate, of the relevant passages | Relevant to claim No. |
| --- | --- | --- |
| A | CN 116051850 A (SHAOXING AIWA TECHNOLOGY CO., LTD. et al.) 02 May 2023 (2023-05-02) entire document | 1-35 |
| A | CN 114125460 A (HANGZHOU DIANZI UNIVERSITY) 01 March 2022 (2022-03-01) entire document | 1-35 |
| A | US 2022207680 A1 (HUAWEI TECHNOLOGIES CO., LTD.) 30 June 2022 (2022-06-30) entire document | 1-35 |
| A | WO 2023050723 A1 (SHENZHEN TETRAS. AI TECHNOLOGY CO., LTD.) 06 April 2023 (2023-04-06) entire document | 1-35 |
| A | CN 112184592 A (TENCENT TECHNOLOGY (BEIJING) CO., LTD.) 05 January 2021 (2021-01-05) entire document | 1-35 |

☑ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **03 January 2025** | **17 January 2025** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/126865** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 113747163 A (SHANGHAI JIAO TONG UNIVERSITY) 03 December 2021 (2021-12-03)<br>    entire document | 1-35 |

**INTERNATIONAL SEARCH REPORT**
Information on patent family members

International application No.

**PCT/CN2024/126865**

| Patent document cited in search report | | | Publication date (day/month/year) | Patent family member(s) | | | Publication date (day/month/year) |
|---|---|---|---|---|---|---|---|
| CN | 116051850 | A | 02 May 2023 | None | | | |
| CN | 114125460 | A | 01 March 2022 | None | | | |
| US | 2022207680 | A1 | 30 June 2022 | WO | 2021051996 | A1 | 25 March 2021 |
| | | | | EP | 4024323 | A1 | 06 July 2022 |
| | | | | EP | 4024323 | A4 | 25 January 2023 |
| WO | 2023050723 | A1 | 06 April 2023 | None | | | |
| CN | 112184592 | A | 05 January 2021 | None | | | |
| CN | 113747163 | A | 03 December 2021 | None | | | |

Form PCT/ISA/210 (patent family annex) (July 2022)